(19) Europäisches Patentamt
European Patent Office
Office européen des brevets

(11) EP 4 370 601 B1

(12) # EUROPEAN PATENT SPECIFICATION

(45) Date of publication and mention of the grant of the patent:
**14.05.2025 Bulletin 2025/20**

(21) Application number: **22751061.7**

(22) Date of filing: **14.07.2022**

(51) International Patent Classification (IPC):
***C08L 33/04*** *(2006.01)* ***C08L 33/12*** *(2006.01)*
***C08F 220/14*** *(2006.01)* ***C08L 35/02*** *(2006.01)*

(52) Cooperative Patent Classification (CPC):
(C-Sets available)
**C08F 220/14; C08L 33/12; C08L 35/00;**
C08L 2205/03; C08L 2207/53 (Cont.)

(86) International application number:
**PCT/EP2022/069728**

(87) International publication number:
**WO 2023/285593 (19.01.2023 Gazette 2023/03)**

(54) **TRANSPARENT ACRYLIC POLYMER COMPOSITION HAVING AN INCREASED RESISTANCE TO ALCOHOLS AND FATS**

TRANSPARENTE ACRYLPOLYMERZUSAMMENSETZUNG MIT ERHÖHTER RESISTENZ GEGEN ALKOHOLE UND FETTE

COMPOSITION DE POLYMÈRE ACRYLIQUE TRANSPARENTE AYANT UNE RÉSISTANCE ACCRUE AUX ALCOOLS ET AUX GRAISSES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.07.2021 EP 21185973**
**16.07.2021 US 202163222474 P**

(43) Date of publication of application:
**22.05.2024 Bulletin 2024/21**

(73) Proprietors:
- **Röhm GmbH**
  **64295 Darmstadt (DE)**
- **Roehm America LLC**
  **Parsippany, NJ 07054 (US)**

(72) Inventors:
- **CARLOFF, Rüdiger**
  **64291 Darmstadt (DE)**
- **ARNOLD, Werner**
  **64850 Schaafheim (DE)**
- **BERNHARD, Kay**
  **64291 Darmstadt (DE)**

(74) Representative: **Röhm Patent Association**
**IP Management**
**Deutsche-Telekom-Allee 9**
**64295 Darmstadt (DE)**

(56) References cited:
**WO-A1-2020/126722** **CN-A- 109 810 439**
**US-B2- 8 524 826** **US-B2- 9 834 645**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 33/12, C08L 51/003, C08L 51/06;**
**C08L 33/12, C08L 51/04, C08L 51/06;**
**C08L 33/12, C08L 51/04, C08L 51/06, C08L 25/12;**
**C08L 33/12, C08L 51/04, C08L 51/06, C08L 25/12, C08L 71/02;**
**C08L 33/12, C08L 51/04, C08L 51/06, C08L 71/02;**
**C08L 35/00, C08L 51/04, C08L 51/06;**
C08F 220/14, C08F 212/08, C08F 222/06

## Description

### Technical field

The present invention relates to a transparent acrylic-based polymer composition having an increased resistance to alcohols, oils and fats. In particular, the composition has an excellent resistance to water isopropanol mixtures, which are commonly used for disinfection and sterilization of disposable medical devices. Additionally, the composition has a high transparency, even after a long-term exposure to commercial disinfectants, low haze and excellent mechanical properties.

Accordingly, the composition of the present invention is highly suitable for the manufacturing of various medical devices such as intravenous and catheter accessories, blood handling devices, chest drainage units, or respiratory ventilating devices. Furthermore, the composition of the present invention is for example suitable for the manufacturing of household and gardening articles, electronic component parts, sanitary and bath equipment, and exterior and interior parts of motor vehicles.

The inventive polymer composition comprises an acrylic-based polymer A, comprising at least one alkyl(meth) acrylate; a olefinic copolymer B, preferably a polyolefin graft copolymer, which comprises at least one olefinic monomer and at least one polar monomer selected from unsaturated carboxylic acids, esters of unsaturated carboxylic acids, and anhydrides of unsaturated carboxylic acids; and a particulate multiphase graft copolymer C, which comprises a core and at least one shell, comprising at least one alkyl(meth)acrylate.

### Background art

Medical grade acrylic-based polymer compositions offer an excellent balance of optical and mechanical properties, can be sterilised using e-beam or $\gamma$-radiation and are compatible with biological materials. In addition, such compositions often have an excellent thermoplastic processability and can be advantageously used for injection moulding. This allows their use in a variety of medical device applications as well as in medical diagnostic devices. Typical applications of such materials include inter alia intravenous and catheter accessories, blood handling devices, chest drainage units, respiratory ventilating devices etc.

Although commercially available medical grade acrylic-based polymer compositions already have a good chemical resistance to materials such as alcohols, oils and fats, they tend to become turbid and get cracks upon a long-term exposure to water/alcohol mixtures. Additionally, such long-term exposure is detrimental for other mechanical properties of the composition. This behaviour becomes particularly problematic in long term exposure, e.g. exposure for several days, to isopropanol-water mixtures, which are now commonly used as disinfectants for medical devices. Polymer compositions for medical applications, must retain their mechanical and optical properties upon a long-term storage in the presence of a disinfectant solution at 23 °C. In particular, formation of haze or cracks should be minimized.

WO 2020/126722 A1 describes transparent acrylic-based polymer compositions having good resistance to alcohols, oils and fats, wherein the compositions comprise a copolymer comprising alkyl(meth)acrylates, aromatic vinyl monomer and unsaturated carboxylic acid anhydride; a copolymer comprising aromatic vinyl monomer and a vinyl cyanide monomer; and a particulate core-shell type graft copolymer comprising a butadiene-based core as a rubbery phase and a copolymer comprising alkyl(meth)acrylates as a hard phase. Even if the polymer compositions of WO 2020/126722 A1 already exhibit a good resistance to alcohols, oils and fats, it is desired to provide improved transparent polymer materials, showing higher chemical resistance, i.e. good stress cracking resistance under harsher conditions, and enhanced mechanical strength, e.g. higher elongation at break, compared to said prior art.

WO 2008/148595 A1 describes a polymer blend comprising a copolymer of methyl methacrylate (MMA), styrene and maleic anhydride as well as a styrene-acrylonitrile copolymer (SAN). This polymer blend has good optical and mechanical properties and an increased stress cracking resistance in the presence of neat isopropanol. WO 2008/148595 A1 is silent in respect to stress cracking resistance in the presence of isopropanol-water mixtures which are commonly used as disinfectants and the change in optical properties during a long-term exposure to said disinfectants.

US 6,689,827 B1 describes a transparent, impact-modified thermoplastic moulding composition comprising a matrix of polymethylmethacrylate and a SAN copolymer, as impact modifier a graft copolymer having a graft base based on butadiene and/or isoprene and an additive consisting essentially of at least one 2,6-disubstituted phenol.

WO 2001/46317 A1 describes a transparent, impact-resistant thermoplastic moulding composition, comprising a mixture of a methyl methacrylate polymer, an styrene/acrylonitrile copolymer and a graft copolymer having a bimodal particle size distribution and containing an elastomeric graft core having a glass transition temperature of less than 0° C and one or more graft shells containing (meth)acrylic acid esters and optionally vinyl aromatic monomers and/or crosslinking monomers. JP H02-272050 A2 describes impact-resistant polymer blends comprising a copolymer, containing methyl methacrylate, maleic anhydride, styrene and C1-C4-alkyl acrylate; a vinyl cyanide/aromatic vinyl copolymer or methyl methacrylate/C1-C4-alkyl acrylate and a copolymer prepared by grafting vinyl cyanide and an aromatic vinyl

compound onto a rubber-like polymer. The polymer blends of JP H02-272050 A2 have a high heat resistance, impact resistance and transparency and are primarily designed for use in automotive applications.

US 9,834,645 B2 describes transparent thermoplastic resin compositions having high environmental stress crack resistance. The resin composition comprises a graft copolymer A, which is preferably obtained by grafting methyl methacrylate/acrylonitrile/styrene on butadiene rubber, and a methyl methacrylate/acrylonitrile/styrene copolymer B.

US 8,524,826 B2 describes transparent acrylic alloy compositions having high chemical and impact resistance. The acrylic alloy comprises a high molecular weight acrylic copolymer, a polyvinylidene fluoride, a core-shell impact modifier and a melt flow processing aid.

Copolymers of olefinic monomers and maleic anhydride, such as polyolefins grafted with maleic anhydride as well as linear copolymers encompassing olefinic monomer units and maleic anhydride units, and their application as compatibilizer in polymer compositions are commonly known in the prior art.

The document JP 2001279105 A describes white polymer composition for medicine-packaging, comprising two or more kinds of resins which are substantially incompatible with one another, e.g. selected from polyolefin, polystyrene, acrylic resin; and a compatibilizer, for example selected from a maleated polypropylene/polystyrene graft copolymer or a ternary copolymer of ethyl acrylic acid, ethylene, and maleic anhydride. The document JP 63268754 A describes a thermoplastic resin having inter alia good chemical resistance, which comprises a blend of polycarbonate and acrylonitrile-styrene copolymer and a compatibilizer, which is ternary polymer comprising an olefin (e.g. ethylene, propylene), an unsaturated dicarboxylic anhydride (e.g. maleic anhydride) and an unsaturated carboxylic alkyl ester (e.g. ethyl acrylate).

For example, WO 2016/010893 A1 describes olefin-maleic anhydride copolymers, preferably alternating 1:1 copolymers of ethylene and maleic anhydride (e.g. ZeMac® products from Vertellus Specialties Inc.), and their application as compatibilizer in engineering plastics, such as acrylonitrile-styrene-butadiene copolymer (ABS) compositions, polycarbonate compositions, or polyamide compositions.

Further, polyolefin maleic anhydride graft copolymers, such as polyethylene grafted maleic anhydride (PE-g-MAH), are commonly known compatibilizer. Their preparation is for example described in WO 95/16718 and WO 2002/093157. For example, US 2011/0254204 describes the use of PE-g-MAH as a matting agent in plastic materials. Often maleic anhydride grafted polyolefins, such as polyethylene grafted with maleic anhydride (PE-g-MAH)and polypropylene grafted with maleic anhydride (PP-g-MAH), are used in thermoplastic resins, such as polyethylene resins, in order to improve the compatibility of the polymer matrix with fillers or reinforcing fibres. Typically, a wide variety of maleic anhydride grafted polyolefins are commercially available, e.g. POLYBOND® products from Chemtura, OREVAC® products from Arkema, SCONA® products from BYK, and MODIC® products from Mitsubishi Chemical Corp.

An object of the invention is to provide novel polymer compositions which can advantageously be used for the production of transparent medical devices and which shows further improved stress cracking resistance to alcohol-water-based disinfectants, oils and fats, improved mechanical strength as well as high transparency, even after long-time exposure to alcohol or oil.

## Disclosure of the invention

The present invention is based on a surprising finding that a long-term stress cracking resistance of medical grade acrylic-based polymer compositions to isopropanol-water-based disinfectants, oils and fats can be significantly increased by addition of a olefinic copolymer, in particular a graft copolymer, which comprises a polar monomer, e.g. maleic anhydride grafted polyethylene (PE-g-MAH). Further, it has surprisingly found, that transparent thermoplastic polymer compositions or moulded parts made therefrom can be obtained, if the acrylic-based polymer is mixed with the olefinic copolymer, e.g. PE-g-MAH, in combination with a particulate multiphase graft copolymer (e.g. known particulate impact modifiers). In particular, this finding was surprising, as the two-component blend of acrylic-based polymer and olefinic copolymer, e.g. a polar grafted polyolefin, does not show transparency. Thus, an advantageous way was found for introducing a polar olefinic copolymer into an acrylic-based polymer with the aid of the particulate multiphase graft copolymer. It seems, that the particulate multiphase graft copolymer advantageously effects the dispersion and compatibility of the olefinic copolymer in the acrylic-based polymer matrix. In this context the present invention is directed to a synergistic combination of said three polymeric components.

The present invention is directed to a polymer composition comprising, based on the weight of the polymer composition, the following components A, B and C:

A. 40.0 to 94.5 wt.-%, preferably 50.0 to 84.0 wt.-%, of at least one acrylic-based polymer comprising at least one alkyl(meth)acrylate;

B. 0.5 to 12.0 wt.-%, preferably 1.0 to 10.0 wt.-%, of at least one olefinic copolymer B comprising (preferably consists of) at least one olefinic monomer and at least one polar monomer selected from unsaturated carboxylic acids, esters of unsaturated carboxylic acids, and anhydrides of unsaturated carboxylic acids,

C. 5.0 to 40.0 wt.-%, preferably 10.0 to 36.0 wt.-%, of at least one particulate multiphase graft copolymer, which comprises (preferably consisting of) a core and at least one shell, comprising at least one alkyl(meth)acrylate.

In terms of the present invention the term "polymer or copolymer comprising or consisting of monomer(s)" is understood in that the polymer or copolymer comprises or is built up of said monomer unit(s). As a skilled person understands said polymers are obtained by polymerisation of the referred monomers, wherein at least one of the unsaturated groups of the monomers is preferably radically polymerized. In case, that the polymer obtained after said polymerization comprises unreacted monomers, which are not incorporated in the polymer chain, this is referred to as residual monomer(s).

In terms of the present invention the term "particulate multiphase graft copolymer" is directed to crosslinked graft copolymers, which may have a core-shell structure including at least one core and at least one shell.

Preferably, the acrylic-based polymer A forms a polymer matrix and the particulate multiphase graft copolymer C is dispersed in said polymer matrix. Preferably, the acrylic-based polymer A together with the optional polymer D forms a polymer matrix and the particulate multiphase graft copolymer C is dispersed in the polymer matrix. For example, it might be possible that the particulate multiphase graft copolymer C as well as the olefinic copolymer B, e.g. the polyolefin graft copolymer, are dispersed in the polymer matrix, wherein the olefinic copolymer B and the particulate multiphase graft copolymer C may form a kind of aggregation.

Preferably, the inventive polymer composition is a thermoplastic moulding composition. Preferably, the inventive polymer composition is a transparent polymer composition. In terms of the present invention, "a transparent polymer composition" or "transparent moulded article" means that the polymer composition or the moulded article exhibits a haze according to standard ASTM D1003 of equal or less than 70 %, preferably equal or less than 50 %, more preferably equal or less than 40 %, measured at 23 °C on an injection moulded specimen having a thickness of 3 mm.

The inventive polymer composition can be prepared and processed in a relatively simple manner and is particularly suitable for the manufacturing of articles using injection moulding, including articles having a complex geometrical shape.

Hence, in its further aspect, the present invention relates to a process for manufacturing of a moulded article from polymer composition of the present invention comprising a step of injection moulding of said composition. Preferably, moulded article produced from the inventive polymer composition is a transparent moulded article.

Yet a further aspect of the present invention relates to moulded articles, in particular moulded articles for medical use, comprising the inventive polymer composition. Importantly, articles manufactured from inventive polymer compositions not only have an excellent resistance to alcohols, alcohol water mixtures, oils and fats but also show a number of further advantageous properties, such as:

- excellent optical properties, in particular high transparency
- high heat distortion resistance.
- outstanding mechanical properties, in particular high modulus of elasticity, high elongation at break and high Vicat softening temperature.

Finally, a further aspect of the present invention is directed to the use of the inventive polymer composition in a medical device, preferably a disposable medical device, for example selected from medical diagnostic devices, intravenous and catheter accessory, blood handling devices, chest drainage units, respiratory ventilating devices, medical filter housings, permanent device housings, tubes, connectors, fittings, and cuvettes. Furthermore, the present invention is directed to the use of the inventive polymer composition in parts of household devices; parts of communications devices; electronic component parts; parts of equipment for hobbies; parts of equipment for sports; parts of gardening equipment; exterior and interior parts of automobiles, ships or aircraft; parts of bodywork component employed in the construction of automobiles, ships or aircraft; parts in sanitary and bath equipment.

## Detailed description of the invention

The polymer composition of the present invention comprises at least one (in particular one or three, preferably exactly one) acrylic-based polymer A, comprising at least one alkyl(meth)acrylate; at least one (in particular one or three, preferably exactly one) olefinic copolymer B, preferably at least one polyolefin graft copolymer, comprising at least one olefinic monomer and at least one polar monomer selected from unsaturated carboxylic acids, esters of unsaturated carboxylic acids, and anhydrides of unsaturated carboxylic acids; and at least one (in particular one or three, preferably exactly one) particulate multiphase graft copolymer C, which comprises a core and at least one shell, comprising at least one alkyl(meth)acrylate; wherein the acrylic-based polymer A forms a polymer matrix and the particulate multiphase graft copolymer C is dispersed in the polymer matrix.

Optionally, the inventive polymer composition may comprises up to 50.0 wt.-%, preferably 1.0 to 50.0 wt.-%, more

preferably 2.0 to 20.0 wt.-%, also preferably .0 to 10.0 wt.-%,, based on the total polymer composition, of at least one further polymeric component D, preferably selected from

copolymers D1, comprising at least one mono vinyl aromatic component, preferably styrene; and at least one carboxylic acid anhydride component, preferably maleic anhydride; and
copolymers D2 comprising at least one mono vinyl aromatic monomer, preferably styrene; and at least one vinyl cyanide monomer, preferably acrylonitrile.

The components A, B and C as well as optional components D and E will be described in the following in a greater detail.

**Acrylic-based polymer A**

The inventive polymer composition comprises 40.0 to 94.5 wt.-%, preferably 50.0 to 84.0 wt.-%, more preferable 55.0 to 80 wt.-%, based on the total polymer composition, of at least one acrylic-based polymer A comprising at least one alkyl(meth)acrylate.
The term "alkyl(meth)acrylates" as used herein may stand for a single alkyl(meth)acrylate or as a mixture of different alkyl(meth)acrylates. The term "(meth)acrylate" as used herein refers not only to methacrylates, e.g. methyl methacrylate, ethyl methacrylate, etc., but also acrylates, e.g. methyl acrylate, ethyl acrylate, etc. and also to mixtures thereof.
For the purposes of the present invention, particular preference is given to C1-C18-alkyl (meth)acrylates, advantageously C1-C10-alkyl (meth)acrylates, in particular C1-C4-alkyl (meth)acrylates. Preferred alkyl methacrylates encompass methyl methacrylate (MMA), ethyl methacrylate, propyl methacrylate, isopropyl methacrylate, n-butyl methacrylate, isobutyl methacrylate, tert.-butyl methacrylate, pentyl methacrylate, hexyl methacrylate, heptyl methacrylate, octyl methacrylate, isooctyl methacrylate, and ethylhexyl methacrylate, nonyl methacrylate, decyl methacrylate, and also cycloalkyl methacrylates, for example cyclohexyl methacrylate, isobornyl methacrylate or ethylcyclohexyl methacrylate. Use of methyl methacrylate is particularly preferred. Preferred alkylacrylates encompass methyl acrylate, ethyl acrylate, propyl acrylate, isopropyl acrylate, n-butyl acrylate, isobutyl acrylate, tert.-butyl acrylate, pentyl acrylate, hexyl acrylate, heptyl acrylate, octyl acrylate, isooctyl acrylate, nonyl acrylate, decyl acrylate, and ethylhexyl acrylate, and also cycloalkyl acrylates, for example cyclohexyl acrylate, isobornyl acrylate or ethylcyclohexyl acrylate.
In a preferred embodiment the acrylic-based polymer A comprises from 40.0 to 100.0 wt.-%, preferably from 45.0 to 100.0 wt.-%, more preferably from 55.0 to 99.5 wt.-%, based on the total acrylic-based polymer A, of at least one alkyl methacrylate monomer (respectively repeat unit) having from 1 to 20, preferably from 1 to 12, more preferably from 1 to 8, most preferably from 1 to 4, carbon atoms in the alkyl group. alkyl(meth)acrylate.
In a particularly preferred embodiment, the acrylic-based polymer A comprises 50.0 to 100.0 wt.-%, preferably 65.0 to 100.0 wt.-%, more preferably 70.0 to 100.0 wt.-% methyl methacrylate MMA.
A suitable acrylic-based polymer A may comprise (preferably consists of), for example:

50.0 to 100.0 wt.-%, preferably 65 to 99 wt.-%, of at least one alkyl(meth)acrylate, preferably methyl methacrylate;

0.0 to 20.0 wt.-%, preferably 0.1 to 4 wt.-% of at least one alkyl(meth)acrylate other than methyl methacrylate (MMA), preferably selected from C1-C10 alkyl acrylates, more preferably selected from methyl acrylate, ethyl acrylate, and butyl methacrylate;

0.0 to 40 wt.-%, preferably 5.0 wt.-% to 30.0 wt.-%, of at least one vinyl aromatic monomer, preferably styrene; and

0.0 to 20 wt.-%, preferably 5.0 to 20.0 wt.-%, of one or more other co polymerizable monomer, for example at least one unsaturated carboxylic acid or unsaturated carboxylic acid anhydride, or acrylonitrile, preferably at least one unsaturated carboxylic acid anhydride, more preferably selected from acrylic anhydride, methacrylic anhydride, maleic anhydride, 1,2-cyclohexanedicarboxylic anhydride, itaconic anhydride, even more preferably maleic anhydride;

wherein all amounts are given based on the total weight of the acrylic-based polymer A.

The inventors further found that the composition of the present invention has particularly advantageous environmental chemical stress resistance and optical properties if the acrylic-based polymer A is a copolymer of:

48.0 to 90.0 wt.-%, preferably 63.0 to 81.0 wt.-% of at least one alkyl(meth)acrylate, preferably at least one C1-C10-alkyl (meth)acrylates, more preferably methyl methacrylate;
8.0 to 35.0 wt.-%, preferably 12.0 to 22.0 wt.-% of at least one mono vinyl aromatic monomer; and
2.0 to 17.0 wt.-%, preferably 7.0 to 15.0 wt.-% of at least one unsaturated carboxylic acid anhydride, preferably maleic anhydride;
wherein all amounts are based on the total weight of the acrylic-based polymer A.

Preferably, the acrylic-based polymer A is obtained by copolymerization of the monomers referred to. Thus, the acrylic-based polymer A is preferably a copolymer comprising or consisting of the monomers referred to in the polymer chain, preferably in nearly random distribution. More preferably, the acrylic based polymer A is not a grafted polymer.

Examples of suitable mono vinyl aromatic monomers include styrene; mono- or polyalkylstyrenes such as *o*-methylstyrene, *m*-methylstyrene, *p*-methylstyrene, *o,p*-dimethylstyrene, *o*-ethylstyrene, *m*-ethylstyrene and *p*-ethylstyrene; styrene derivatives containing functional groups such as methoxystyrene, ethoxystyrene, vinylbenzoic acid, methyl vinylbenzoate, vinylbenzyl acetate, hydroxystyrene, *o*-chlorostyrene, *p*-chlorostyrene and divinylbenzene; 3-phenylpropylene, 4-phenylbutene and $\alpha$-methylstyrene. Among these, styrene is mostly preferred.

The choice of the unsaturated carboxylic acid or unsaturated carboxylic acid anhydride in the acrylic-based polymer A is not particularly limited. Said carboxylic acid anhydrides may be advantageously selected from methacrylic acid, acrylic anhydride, methacrylic anhydride, maleic anhydride, maleic acid, 1,2-cyclohexanedicarboxylic anhydride, cyclohexyl maleimide, and itaconic anhydride, wherein maleic anhydride is particularly preferred.

A suitable acrylic-based polymer A may comprise (preferably consists of), for example:

50.0 wt.-% to 90.0 wt.-%, preferably 65 to 90 wt.-%, more preferably 70.0 wt.-% to 83.0 wt.-%, of alkyl(meth)acrylates;
5.0 wt.-% to 30 wt.-%, preferably 5.0 wt.-% to 20.0 wt.-%, more preferably 7 wt.-% to 15 wt.-%, of styrene; and
5.0 wt.-% to 20.0 wt.-%, preferably 5.0 wt.-% to 15.0 wt.-%, more preferably 7 wt.-% to 10 wt.-%, of maleic anhydride, wherein all amounts are given based on the total weight of the acrylic-based polymer A.

In a particularly preferred embodiment of the invention, the acrylic-based polymer A is a (meth)acrylate based (co)polymer, which is a copolymer of MMA, styrene and maleic anhydride. Such suitable acrylic-based polymers A are for example described in WO 2020/126722 A1. Hence, such acrylic-based polymer A may comprise (preferably consists of), for example:

50.0 wt.-% to 90.0 wt.-%, preferably 70.0 wt.-% to 80.0 wt.-%, of MMA,
10.0 wt.-% to 20.0 wt.-%, preferably 12.0 wt.-% to 18.0 wt.-%, of styrene and
5.0 wt.-% to 15.0 wt.-%, preferably 8.0 wt.-% to 12.0 wt.-%, of maleic anhydride wherein all amounts are given based on the total weight of the acrylic-based polymer A.

For the sake of achieving optimal rheological properties of the polymer composition the weight average molecular weight Mw of the polymer A is preferably adjusted to be 60 000 to 280 000 g/mol, more preferably from 120 000 to 240 000 g/mol. Determination of Mw can be advantageously performed by means of gel permeation chromatography (GPC), for instance using PMMA as a calibration standard and tetrahydrofuran (THF) with 0.2 vol.-% trifluoracetic acid (TFA) as an eluent. As an alternative to using a calibration standard a scattering detector may also be employed (cf. H. F. Mark et al., Encyclopaedia of Polymer Science and Engineering, 2nd. Edition, Vol. 10, page 1 et seq., J. Wiley, 1989). Appropriate GPC columns can be readily selected by a skilled person. Such columns are, for instance, commercially available from the company PSS Standards Service GmbH (Mainz, Germany) as columns of the PSS SDV series. As will be readily appreciated by a skilled person, a combination of several GPC columns may also be employed.

Processes suitable for preparation of the acrylic-based polymer A are known in the state of the art. For example, DE 1231013 B discloses a process for preparation of copolymers through bulk polymerisation from 1 to 50 wt.-% of alkyl styrene and 99 to 50 wt.-% of alkyl methacrylate, together with lower amounts of maleic anhydride (MAH) and/or methacrylic acid.

US 3,336,267 A describes a process for preparing copolymers comprising 5 to 95 mol.-% of vinyl aromatic substance, 5 to 40 mol.-% of an unsaturated, cyclic anhydride as well as 0 to 90 mol.-% of an alkyl(meth)acrylate. Here, a mixture of the above monomers is continuously polymerised together with an inert solvent, and the polymer is continuously removed from the polymerisation mixture.

EP 264590 A discloses a process for preparing a moulding compound from a monomer mixture comprising methylmethacrylate, vinyl aromatic substance, maleic anhydride and, optionally, a lower alkylacrylate, in the presence of a non-polymerisable organic solvent, and within a temperature range of 75 to 150 °C.

In another preferred embodiment the acrylic-based polymer A is a thermoplastic (meth)acrylate polymer, which comprises (preferably consist of):

50.0 to 100.0 wt.-%, preferably from 60.0 to 100.0 wt.-%, particularly preferably from 75.0 to 100.0 wt.-%, in particular from 85.0 to 99.5 wt.-%, of at least one alkyl methacrylate monomer (respectively repeat unit), having from 1 to 20, preferably from 1 to 12, more preferably from 1 to 8, in particular from 1 to 4, carbon atoms in the alkyl group;

0.0 to 40.0 wt.-%, preferably from 0.0 to 25.0 wt.-%, in particular from 0.1 to 15.0 wt.-%, of at least one alkyl acrylate monomers (respectively repeat unit), having from 1 to 20, preferably from 1 to 12, advantageously from 1 to 8, in particular from 1 to 4, carbon atoms in the alkyl group; and

0.0 to 30.0 wt.-%, preferably 0.0 to 10 wt.-%, more preferably 0.0 to 8.0 wt.-% of at least one mono vinyl aromatic monomers (respectively repeat unit), e.g. styrene;

wherein all amounts are based on the total weight of the acrylic-based polymer A.

Particularly, the acrylic-based polymer A is a thermoplastic (meth)acrylate polymer, which comprises, based on its total weight, 50.0 to 100.0 wt.-%, preferably 70.0 to 100.0 wt.-%, more preferably 95.0 to 100.0 wt.-% MMA, and 0.0 to 20.0 wt.-%, preferably 0.0 to 10.0 wt.-%, more preferably 0.0 to 5.0 wt.-% of an alkyl(meth)acrylate other than MMA. The alkyl(meth)acrylate other than MMA can be selected from substantially any of the preferred alkylmethacrylates and alkylacrylates mentioned above. For instance, the alkyl(meth)acrylates may consist of MMA and ethyl acrylate or of MMA and butylacrylate or MMA and butylmethacrylate. In yet a further preferred embodiment, the alkyl(meth)acrylates solely consist of MMA.

**Olefinic copolymer B**

The inventive polymer composition comprises 0.5 to 12.0 wt.-%, preferably 1.0 to 10.0 wt.-%, more preferably 2.0 to 8.0 wt.-%, based on the total polymer composition, of at least one olefinic copolymer B, preferably at least one polyolefin graft copolymer, which comprises (preferably consists of) at least one olefinic monomer and at least one polar monomer selected from unsaturated carboxylic acids, esters of unsaturated carboxylic acids, and anhydrides of unsaturated carboxylic acids.

The olefinic copolymer B may be selected from branched or grafted copolymers, e.g. a polyolefin grafted with at least one polar monomer as defined, or from linear copolymers, which consists of a single main chain including at least one olefinic monomer and at least one polar monomer as described, e.g. statistical copolymers, alternating copolymers , gradient copolymers, and block copolymers.

For example, alternating copolymers of ethylene and maleic anhydride are known and commercially available as ZeMac® E-400 from Vertellus Specialties Inc., E400. For example, terpolymers, e.g. random terpolymers, of ethylene, acrylic ester and maleic anhydride are known and commercially available as LOTADER® from SK Functional Polymer.

In a preferred embodiment the at least one olefinic copolymer B is at least one polyolefin graft copolymer, which comprises (preferably consists of) at least one polyolefin base polymer (also referred to as polyolefin backbone polymer) grafted with at least one polar monomer selected from unsaturated carboxylic acids, esters of unsaturated carboxylic acids, and anhydrides of unsaturated carboxylic acids. More preferably, the at least one polar monomer is selected from anhydrides of unsaturated carboxylic acids. Most preferably the at least one polar monomer is maleic anhydride (MAH).

In a preferred embodiment the olefinic copolymer B, preferably the polyolefin graft copolymer, comprises from 0.5 to 3.0 wt.-%, preferably from 0.7 to 2.5 wt.-%, and even more preferably from 1.0 to 2.0 wt.-%, based on the weight of the olefinic copolymer B, of the at least one polar monomer.

In a preferred embodiment the weight ratio of the olefinic copolymer B to the particulate graft copolymer C in the inventive polymer composition is less than or equal to 0.4wt%/wt%, preferably less than or equal to 0.3 wt%/wt%, more preferably less than or equal to 0.2 wt%/wt%. Typically, the weight ratio of olefinic copolymer B to particulate graft copolymer C in the polymer composition is greater than 0.05 wt%/wt%, preferably greater than 0.1 wt%/wt%, more preferably greater than 0.13 wt%/wt%. Preferably, in this context the particulate graft copolymer C has a volume-averaged particle diameter in the range from 40 nm to 600 nm.

In an preferred embodiment the polyolefin graft copolymer comprises at least one base polyolefin polymer, grafted with 0.5 to 3.0 wt.-%, preferably from 0.7 to 2.5 wt.-%, and even more preferably from 1.0 to 2.0 wt.-%, based on the weight of the graft copolymer, of the at least one polar monomer selected from unsaturated carboxylic acids, esters of unsaturated carboxylic acids, and anhydrides of unsaturated carboxylic acids, preferably grafted with at least one anhydride of unsaturated carboxylic acids, more preferably grafted with maleic anhydride.

In terms of the present invention olefinic monomer means a radically polymerizable hydrocarbon monomer having at least one carbon-carbon double bond, preferably at least one carbon-carbon double bond located at the primary or alpha ($\alpha$) position, and having 2 or more carbon atoms, preferably 2 to 20 carbon atoms, more preferably 2 to 8 carbon atoms.

In terms of the present invention polyolefin means a homo- or copolymer comprising at least one olefinic monomer, preferably at least one alpha-olefinic monomer, having at least one carbon-carbon double bond, and having 2 or more carbon atoms, preferably 2 to 20 carbon atoms, more preferably 2 to 8 carbon atoms. Suitable polyolefins may be selected from:

- homo and copolymers of alpha-olefins having 2 or more carbon atoms, preferably 2 to 20 carbon atoms, more preferably 2 to 8 carbon atoms, such as polyethylene, high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), polypropylene, 1-polybutene, 1-polymethyl pentene, ethylene-propylene copolymers, ethylene-1-butene copolymers, ethylene-4-methyl-1-pentene copolymers, ethylene-1-hexene copolymers, ethylene-1-octene copolymers, ethylene-1-decene copolymers, propylene-1-butene copolymers, propylene-4-methyl-1-pentene copolymers, propylene-1-hexene copolymers, propylene-1-octene copolymers and propylene-1-decene copolymers, propylene/isobutylene copolymers, or mixtures thereof;

- copolymers of alpha-olefins having 2 or more carbon atoms, preferably 2 to 20 carbon atoms, more preferably 2 to 8 carbon atoms, with cycloolefins (e.g. cyclopentene or norbornene);

- copolymers of alpha-olefins having 2 or more carbon atoms, preferably 2 to 20 carbon atoms, more preferably 2 to 8 carbon atoms, with diolefins (e.g. butadiene, isoprene, hexadiene, dicyclopentadiene), such as ethylene-propylene-diene terpolymers, propylene-butadiene copolymers, isobutylene-isoprene copolymers;

- copolymers of alpha-olefins having 2 or more carbon atoms, preferably 2 to 20 carbon atoms, more preferably 2 to 8 carbon atoms, with other vinyl monomers (e.g. styrene, (meth)acrylic monomers or vinyl acetate), such as ethylene-alkyl acrylate copolymers, ethylene-alkyl methacrylate copolymers, ethylene-vinyl acetate (EVA) copolymers.

In a preferred embodiment, the olefinic copolymer B is a polyolefin graft copolymer, wherein the base polymer of the polyolefin graft copolymer is selected from polyethylene (preferably HDPE, HDPE-HMW, HDPE-UHMW, MDPE, LDPE, LLDPE); polypropylene; copolymers of ethylene (preferably ethylene-propylene copolymers, ethylene-1-butene copolymers, ethylene-1-hexene copolymers, ethylene-1-octene copolymers); copolymers of propylene (preferably propylene-1-hexene copolymers, propylene-1-octene copolymers and propylene-1-decene copolymers); and polystyrene (preferably sPS). More preferably, the polyolefin base polymer of the graft copolymer B is selected from polyethylene and polypropylene, more preferably from polyethylene, such as HDPE, HDPE-HMW, HDPE-UHMW, MDPE, LDPE, LLDPE.

The polyolefin base polymer (or also referred to as polyolefin backbone polymer) of the polyolefin graft copolymer is grafted with at least one polar monomer selected from unsaturated carboxylic acids, esters of unsaturated carboxylic acids, and anhydrides of unsaturated carboxylic acids, via commonly known methods.

Typically, unsaturated carboxylic acids and their respective anhydrides includes unsaturated monocarboxylic acids (e.g. acrylic acid, methacrylic acid, alpha-ethyl acrylic acid or cyanoacrylic acid), unsaturated di-carboxylic acids (such as maleic acid, fumaric acid, itaconic acid, citraconic acid, tetrahydrophthalic acid, butenyl succinic acid), and substituted derivatives thereof, wherein the substituted derivatives, preferably the mono- or -di substituted derivates, may be C1-C3-alky substituted; C6-C12-aryl substituted or halo substituted derivatives (e.g. 2-methyl maleic acid, 2-ethyl-maleic acid, 2-phenyl-maleic acid, 2,3-dimethyl maleic acid, chloro maleic acid).

Specific preferred examples of the unsaturated carboxylic acid or anhydride thereof include acrylic acid, methacrylic acid, alpha-ethyl acrylic acid, maleic acid, fumaric acid, itaconic acid, citraconic acid, tetrahydrophthalic acid, chloro maleic acid, and the anhydrides thereof. More preferred examples include acrylic acid, methacrylic acid, maleic acid, fumaric acid and the anhydrides thereof. Among these acids and anhydrides, most preferred are maleic acid and maleic anhydride.

The grafting can also take place with an ester of the mentioned mono- or dicarboxylic acids, e.g. an ester with a C1-C12-alcohol, such as methanol, ethanol, propanol, butanol, isobutanol. Preferably, esters of unsaturated carboxylic acids may be selected from esters of acrylic acid and methacrylic acid, such as methyl methacrylate, ethyl acrylate, glycidyl methacrylate, butyl acrylate, hydroxyethyl acrylate.

In a preferred embodiment the olefinic copolymer B is a polyolefin graft copolymer and comprises (preferably consists of) at least one polyolefin base polymer, grafted with at least one (preferably exactly one) polar monomer selected from maleic acid, fumaric acid, maleic anhydride, acrylic acid, methacrylic acid, methyl methacrylate, ethyl acrylate, glycidyl methacrylate, butyl acrylate, and hydroxyethyl acrylate; more preferably grafted with at least one (preferably exactly one) polar monomer selected from maleic acid, maleic anhydride (MAH), acrylic acid (AA), methacrylic acid (MAA), methyl methacrylate (MMA), ethyl acrylate (EA), butyl acrylate (BA), and hydroxyethyl acrylate, most preferably grafted

with maleic anhydride (MAH).

Also, the polyolefin graft copolymer may be grafted with two or more polar monomer as described above, selected from unsaturated carboxylic acids, esters of unsaturated carboxylic acids, and anhydrides of unsaturated carboxylic acid. Further, the polyolefin graft copolymer may be grafted with at least one polar monomer as described above in combination with at least one vinyl aromatic monomer, such as styrene.

Examples of suitable polyolefin graft copolymers include Scona® products available from BYK/Deutschland, as well as Modic® products available from Mitsubishi Chemical Corp, particularly PE types and PP types of Modic® products.

Typically, the olefinic copolymer B, preferably the polyolefin graft copolymer, used in the present invention has a melt flow rate (MFR) of from 0.5 to 50 g/10 min as measured at 190° C under a load of 2.16 kg (DIN ISO 1133).

The olefinic copolymer B may be prepared by commonly known polymerization techniques, such as radical polymerization, for example via emulsion, solution, or bulk polymerization. The polyolefin graft copolymer may be prepared by graft-copolymerizing the polyolefin with the unsaturated carboxylic acid, ester or anhydride thereof, using various conventionally known methods. The method of manufacture can, for example, carried out via solid phase synthesis, e.g. as described in WO 2002/093157. Further, other known methods are possible, e.g. melt, solvent or suspension methods. For example, melt methods include melting the polyolefin using an extruder, etc, and then adding a monomer to be grafted to the molten polyolefin to copolymerize the polyolefin therewith.

**Particulate multiphase graft copolymer C**

The inventive polymer composition comprises 5.0 to 40.0 wt.-%, preferably 10.0 to 36.0 wt.-%, more preferably 18.0 to 35.0 wt.-%, based on the total polymer composition, of at least one particulate multiphase graft copolymer C, which comprises a core and at least one shell, comprising at least one alkyl(meth)acrylate. Typically, the particulate multiphase graft copolymer C comprises an elastomeric core or at least one elastomeric intermediate layer.

In terms of the present invention an elastomeric core or an elastomeric layer means a core or layer composed of a polymer or of a polymer composition having a glass transition temperature $T_g < 20$ °C, preferably $T_g < 0$°C.

"Particulate multiphase graft copolymer" in this context means a crosslinked graft copolymer which may have a core-shell structure including at least one core and one or more shells.

The terms "alkyl(meth)acrylates"; "mono vinyl aromatic vinyl monomer"; and "vinyl cyanide monomer" as used in the context of the graft copolymer C have the same meaning as described above in the context of polymers A and D.

Preferably, the particulate multiphase graft copolymer C is dispersed in the polymer matrix which is formed by the acrylic-based polymer A and optionally further polymeric components D. In some embodiments, the graft copolymer C may be nearly uniformly dispersed in the polymer matrix in form of non-aggregating singular particles. In other embodiments, however, the particulate graft copolymer C may form aggregates, wherein said aggregates are nearly uniformly dispersed in the polymer matrix.

Preferably, the particulate multiphase graft copolymer C has a core-shell structure or core-shell-shell structure.

In a preferred embodiment the particulate multiphase graft copolymer C has a volume-averaged particle diameter from 20 to 1000 nm, preferably from 50 to 500 nm, more preferably from 100 nm to 400 nm, determined by photon correlation spectroscopy according to DIN ISO 13321 (2017) in water at 23 °C. For instance, a commercially available instrument, such as Laser Diffraction Particle Size Analyzer from Beckman Coulter Inc. (e.g. LS 13 320 Particle Size Analyzer from Beckman Coulter) can be used for this purpose.

The particulate multiphase graft copolymer C may be selected from known particulate impact modifiers, such as impact modifiers based on a polybutadiene core or impact modifiers based on a crosslinked poly(meth)acrylate core. The particulate multiphase graft copolymer C exhibits a multiphase structure, which comprises a core and at least one, preferably one or two, shells. Typically, the particulate multiphase graft copolymer C exhibits a hard, outer shell comprising (preferably consisting of) at least one alkyl(meth)acrylate and optionally other comonomers, such as mono vinyl aromatic monomer (e.g. styrene) and/or vinyl cyanide monomer (e.g. acrylonitrile). Preferably, the hard, outer shell exhibit the same or similar refraction index as the polymer matric formed by the acrylic-based polymer A and optional further polymeric component D (e.g. D1 described below).

Preferably, the multiphase graft copolymer C comprises an elastomeric core or one or more elastomeric inner shell(s), which represents a rubbery phase. Typically, the elastomeric or rubbery phase exhibits a glass transition temperature $T_g < 20$ °C, preferably $T_g < 0$°C, and is based on a crosslinked polymer, e.g. comprising a conjugated diene or a crosslinked alkyl(meth)acrylate, preferably a cross-linked C1-C10 alkyl(meth)acrylate.

In particular a conjugated diene in the core of C contains at least two, preferably exactly two, conjugated carbon-carbon double bonds and preferably a total of 4 to 12 carbon atoms, preferably 4 to 8 carbon atoms. For example, a suitable conjugated diene may be selected from 1,3-butadiene, 2-methyl-1,3-butadiene, 2-ethyl-1,3-butadiene, 2,3-dimethyl-1,3-butadiene, 1,3-pentadiene, 3-butyl-1,3-octadiene, and mixtures thereof. Preferably, the conjugated diene monomer is 1,3-butadiene or isoprene, more preferably 1,3-butadiene.

In a preferred embodiment the particulate multiphase graft copolymer C has a butadiene-based elastomeric

core, wherein the butadiene may be copolymerized with styrene and / or butyl acrylate. Preferably, the graft copolymer C is a particulate core-shell type graft copolymer comprises (preferably consists of) a butadiene-based core as a rubbery phase and a hard, outer shell comprising a polymer of at least one alkyl(meth)acrylate, optionally, at least one mono vinyl aromatic monomer (e.g. styrene), and, optionally, at least one vinyl cyanide monomer (e.g. acrylonitrile). Preferably, the butadiene-based core comprises at least 65.0 wt.-%, preferably at least 75.0 wt.-%, more preferably at least 80.0 wt.-% polybutadiene, and optionally 0 to 20 wt.%, of one or more additional monomers, preferably selected from styrene and/or butyl acrylate, based on the weight of the butadiene-based core.

In a particularly preferred embodiment, the particulate multiphase graft copolymer C is substantially free of vinyl cyanide monomer.

Typically, the content of the vinyl cyanide monomer, as defined above, in the particulate core-shell type graft copolymer C is not higher than 5.0 wt.-%, preferably not higher than 2.0 wt.-%, more preferably not higher than 0.5 wt.-%, based on the weight of the graft copolymer C.

In a preferred embodiment the graft copolymer C comprises a butadiene-based elastomeric core as a rubbery phase and a copolymer comprising alkyl(meth)acrylates and optionally an aromatic vinyl monomer as a hard, outer shell. Preferably, the particulate multiphase graft copolymer C comprises (preferably consists of):

a butadiene-based core, comprising
at least 65.0 wt.-%, preferably at least 75.0 wt.-%, more preferably at least 80.0 wt.-%, based on the weight of the butadiene-based core, polybutadiene; and
an outer shell, comprising
50.0 wt.-% to 100.0 wt.-%, preferably 60.0 wt.-% to 100.0 wt.-%, more preferably 65.0 wt.-% to 100.0 wt.-%, based on the weight of the outer shell, of at least one alkyl(meth)acrylate, e.g. methyl methacrylate, and
0.0 wt.-% to 50.0 wt.-%, preferably 0.0 wt.-% to 40.0 wt.-%, more preferably 0.0 wt.-% to 35.0 wt.-%, based on the weight of the outer shell, of at least one aromatic vinyl monomer, e.g. styrene.

In one preferred embodiment of the present invention, the particulate multiphase graft copolymer C encompasses a polybutadiene core, optionally comprising other co-polymerizable monomers, e.g. up 2 wt.-% butyl acrylate; grafted with 17 to 22 weight parts of MMA, 0 to 7 weight parts of styrene and 0 to 3 weight parts of ethyl acrylate and/or butyl acrylate, based on the total weight of the particulate multiphase graft copolymer. Typically, the weight ratio of polybutadiene to the other monomers ranges from about 1: 1 to about 4:1, respectively. Such graft copolymers are described e.g. in US 4,085,166 A. The corresponding materials can be prepared by substantially any known polymerisation process such as by free radical polymerisation utilizing initiators and molecular weight regulators commonly used in the prior art.

According to another preferred embodiment the particulate multiphase graft copolymer C is selected from graft copolymers based on an elastomeric crosslinked alkyl (meth)acrylate core (also referred to as multiphase alkyl (meth) acrylate graft copolymers in the following).

Preferably, such multiphase alkyl (meth)acrylate graft copolymers are obtained by emulsion polymerization, preferably by sequentially emulsion polymerization, of alkyl (meth)acrylate monomers and optionally other co-polymerizable monomers, wherein the obtained emulsion polymer (graft copolymer C) has a multiphase structure, which comprises at least one core and at least one, preferably one or two, shells.

For example, the multiphase alkyl (meth)acrylate graft C polymer may be formed by crosslinked particles having core-shell structure or core-shell-shell structure, having volume-averaged particle diameter from 20 nm to 500 nm, preferably from 50 nm to 450 nm, more preferably from 100 nm to 400 nm and most preferably from 150 nm to 350 nm, determined by photon correlation spectroscopy according to DIN ISO 13321 (2017) in water at 23 °C.

In one preferred embodiment the multiphase alkyl (meth)acrylate graft copolymer comprises a soft, elastomeric core and a hard, non-elastomeric outer phase, which is produced in the presence of the core, typically via graft emulsion polymerization (core-shell graft copolymer).

In another preferred embodiment the multiphase alkyl (meth)acrylate graft copolymer comprises a hard, non-elastomeric core; a soft, elastomeric intermediate shell, which is produced in the presence of the core, typically via graft emulsion polymerization, and a hard, non-elastomeric outer shell, which is produced in the presence of the intermediate core-shell particles, typically via graft emulsion polymerization (core-shell-shell graft copolymers). Preferably, the particulate multiphase graft copolymer C is composed of a hard core, that is for example build up from crosslinked methyl methacrylate, a soft intermediate shell, which is for example build up from crosslinked C1-C10 alkyl acrylate, preferably n-butyl acrylate; and a hard, outer shell, that is for example built up from non-crosslinked methyl methacrylate. Typically, said core-shell-shell graft copolymers are produced as described in EP 1 332 166 B1, WO 02/20634 or EP 0 522 351.

Preferably, the outer shell of the particulate multiphase graft copolymer C is a hard phase comprising at least 80 wt.-%, based on the outer shell, at least one C1-C6 alkyl methacrylate, preferably at least 80 wt.-%, based on the outer shell, of methyl methacrylate.

Preferably, at least 50 wt.-%, more preferably at least 55 wt.-%, more preferably at least 80 wt.-%, based on the total weight of the particulate multiphase graft copolymer C, of the outer layer is covalently bonded to the soft phase, i.e. soft core of core-shell graft copolymer or intermediate shell of core-shell-shell graft copolymer. Typically, the amount of covalently bonded outer layer (grafted polymer) (or also referred to as degree of grafting) is determined as being the amount insoluble in acetone.

Preferably, the particulate multiphase graft copolymer C comprises at least 60 wt.-%, preferably at least 75 wt.-%, based on the graft copolymer C, of at least one C1-C20 alkyl (meth)acrylate, more preferably methyl methacrylate and/or n-butyl acrylate.

Generally, (meth)acrylates include C1-C10-alkyl (meth) acrylates, C2-C20-alkenyl (meth)acrylates, C6-C20 aryl (meth)acrylates, C6-C20 aralkyl (meth)acrylates, C1-C10 hydroxyalkyl (meth)acrylates, glycol di(meth)acrylates, and polyfunctional (meth)-acrylates.

Preferably the particulate multiphase graft copolymer C comprises at least one C1-C10 alkyl methacrylate, preferably selected from methyl methacrylate, ethyl methacrylate, propyl methacrylate, isopropyl methacrylate, n-butyl methacrylate, isobutyl methacrylate, tert-butyl methacrylate, pentyl methacrylate, hexyl methacrylate, heptyl methacrylate, octyl methacrylate, isooctyl methacrylate and ethylhexyl methacrylate, and also cycloalkyl methacrylates, such as cyclohexyl methacrylate.

Preferably the particulate multiphase graft copolymer C comprises at least one C1-C10 alkyl acrylate, preferably selected from methyl acrylate, ethyl acrylate, propyl acrylate, isopropyl acrylate, n-butyl acrylate, isobutyl acrylate, tert-butyl acrylate, pentyl acrylate, hexyl acrylate, heptyl acrylate, octyl acrylate, isooctyl acrylate and ethylhexyl acrylate, and also cycloalkyl acrylates, such as cyclohexyl acrylate.

In a preferred embodiment, the particulate multiphase graft copolymer C is selected from graft copolymers based on an elastomeric crosslinked alkyl (meth)acrylate core and comprises (preferably consists of):

at least 40 wt.-%, preferably 40 to 70 wt.-%, of at least one C1-C10, preferably C1-C6 alkyl methacrylate, preferably methyl methacrylate;

5 to 45 wt.-%, preferably 20 to 45 wt.-%, preferably 25 to 42 wt.-%, of at least one C1-C10 alkyl acrylate, preferably C1-C6 alkyl acrylate, preferably selected from ethyl acrylate, methyl acrylate, 2-ethylhexyl acrylate and butyl methacrylate, more preferably the C1-C10 alkyl acrylate includes n-butyl acrylate;

0 to 2 wt.-%, preferably 0.1 to 2 wt.-%, more preferably 0.5 to 1 wt.-%, of at least one crosslinking monomer, preferably a polyfunctional (meth)acrylate and/or allyl (meth)acrylate; and

0 to 15 wt.-%, preferably 0 to 10 wt.-%, more preferably 0.5 to 5 wt.-%, of optionally further monomers, preferably different from the monomers mentioned above, for example vinyl aromatic monomers, e.g. styrene, benzyl methacrylate.

The amounts are given based on the total mass of monomers.

It is preferred that the particulate multiphase graft copolymer C comprises vinyl aromatic monomers, e.g. styrene and/or C7-C20 aralkyl (meth)acrylates, such as benzylmethacrylate, in order to adjust the differences of the reflexing index of the hard and the soft phase. Vinyl aromatic monomers, which may be used are styrene, substituted styrenes with an alkyl substituent in the side chain, e.g. $\alpha$-methylstyrene and $\alpha$-ethylstyrene, substituted styrenes with an alkyl substituent on the ring, such as vinyltoluene and p-methylstyrene, and halogenated styrenes, such as monochlorostyrenes, dichlorostyrenes, tribromostyrenes and tetrabromostyrenes.

Typically, the crosslinking monomer has two or more polymerizable double bonds in the molecule. The crosslinking monomer may be selected from bifunctional (meth)acrylates, tri- or multifunctional (meth)acrylates, and other known crosslinkers, such as allyl methacrylate, allyl acrylate, and divinylbenzenes.

For example, bifunctional (meth) acrylates are di-esters of (meth)acrylic acid and a poly-functional alcohol, e.g. di(meth)acrylate of propane diol, butane diol, hexane diol, octane diol, nonane diol, decane diol, eicosane diol, ethylene glycol, diethylene glycol, triethylene glycol, tetraethylene glycol, dodecaethylene glycol, tetradecaethylene glycol, propylene glycol, dipropyl glycol, tetradecapropylene glycol. For example, tri- or multi-functional (meth) acrylates are tri- or multi-esters of (meth)acrylic acid and a poly-functional alcohol, e.g. trimethylolpropane tri(meth)acrylates and pentaerythritol tetra (meth)acrylate. Suitable cross-linking monomers are for example describes in WO 02/20634 and EP 0 522 351.

Preferably, the particulate multiphase graft copolymer C comprises at least one crosslinking monomer selected from ethylene glycol methacrylate, 1,4-butanediol dimethacrylate, divinylbenzene, and allyl (meth)acrylate. More preferably the crosslinking monomer is allyl methacrylate.

In a preferred embodiment the particulate multiphase graft copolymer C is a core-shell-shell graft copolymer

comprising (preferably consisting of):

C-A2) 5 to 40 % by weight, based on the total graft copolymer, of a hard, non-elastomeric core C-A2, having a glass transition temperature Tg above 50 °C, which is built up from: C-A2.1)80 to 100 % by weight, based on CA2, of at least one C1-C6 alkyl methacrylate, preferably of methyl methacrylate; C-A2.2)0 to 20 % by weight, based on C-A2, of at least one further ethylenically unsaturated, free radically polymerizable monomer; and C-A2.3)0 to 5 % by weight, based on C-A2, of at least one crosslinking monomer, having two or more ethylenically unsaturated groups;

C-B2) 20 to 75 % by weight, based on the total graft copolymer, of a soft elastomeric intermediate shell C-B2, having a glass transition temperature Tg below 0 °C, which is built up from: C-B2.1)45 to 99.5 % by weight, based on B2, of at least one C1-C10 alkyl acrylate, preferably n-butyl acrylate; C-B2.2)0.5 to 5 % by weight, based on B2, of at least one crosslinking monomer, having two or more ethylenically unsaturated groups; and C-B2.3)0 to 50 % by weight, based on B2, of at least one further ethylenically unsaturated, free radically polymerizable monomer, preferably a monomer having an aromatic group; and

C-C2) 15 to 60 % by weight, based on the total graft copolymer, of a hard,outer shell C-C2, having a glass transition temperature Tg above 50 °C, which is built up from: C-C2.1)80 to 100 % by weight, preferably 90 to 100 % by weight, based on C-C2, of at least one C1-C6 alkyl methacrylate, preferably methyl methacrylate; and C-C2.2)0 to 20 % by weight, preferably 0 to 10 % by weight, based on C-C2, of at least one further ethylenically unsaturated free radically polymerizable monomer.

Preferably, at least 15% by weight, more preferably at least 25 % by weight of the hard, outer shell C-C2 are covalently bonded to the soft elastomeric intermediate shell C-B2.

Preferred graft copolymers C are polymer particles which can have a multilayer core-shell structure and are obtained by emulsion polymerization, described for example in EP 0 113 924 A2, EP 0 522 351 A1, EP 0 465 049 A2 and EP 0 683 028 A1.

**Optional polymeric component D**

The inventive polymer composition may comprise one or more optional polymeric components D, different from the acrylic-based polymer A, the olefinic copolymer B and the particulate multiphase graft copolymer C. Typically, the optional polymeric components D may be present in an amount of 0.0 to 50.0 wt.-%, preferably 1.0 to 30.0 wt.-%, more preferably 2.0 to 20.0 wt.-%, also preferably 4.0 to 15.0 wt.-%, also preferably 4.0 to 10 wt.-%, based on the total polymer composition. Preferably, the optional polymeric component D is selected from polymers which can be homogenously mixed with the acrylic-based polymer A and which can form a polymer matrix together with acrylic-based polymer A.

According to a preferred embodiment the inventive polymer composition comprises up to 50.0 wt.-%, preferably 1.0 to 50.0 wt.-%, more preferably 2.0 to 20.0 wt.-%, based on the total polymer composition, of at least one further polymeric component D selected from:

copolymers D1 comprising at least one mono vinyl aromatic component, preferably styrene; and at least one carboxylic acid anhydride component, preferably maleic anhydride; and
copolymers D2 comprising at least one mono vinyl aromatic monomer, preferably styrene; and at least one vinyl cyanide monomer, preferably acrylonitrile.

In a preferred embodiment, the inventive polymer composition comprises 0 to 20 wt.-%, preferably 2.0 to 20.0 wt.-%, more preferably 4.0 to 15.0 wt.-%, of a copolymer D1, based on the total polymer composition, comprising at least one mono vinyl aromatic monomer and at least one carboxylic acid anhydride monomer, as polymeric component D.

Preferably, the optional copolymer D1 is a copolymer of

65.0 wt.-% to 90.0 wt.-%, preferably 70.0 wt.-% to 90.0 wt.-%, more preferably 72.0 wt.-% to 85.0 wt.-%, even more preferably 75.0 wt.-% to 80.0 wt.-%, based on the weight of the copolymer D1, of at least one mono vinyl aromatic monomer, preferably styrene; and

10.0 wt.-% to 35.0 wt.-%, preferably 10.0 wt.-% to 30.0 wt.-%, more preferably 15.0 wt.-% to 28.0 wt.-%, even more preferably 20.0 wt.-% to 25.0 wt.-%, based on the weight of the copolymer D1, of at least one carboxylic acid anhydride monomer, preferably maleic anhydride.

Such copolymers D1 are commonly known as styrene-maleic anhydride (SMAH) resins and are commercially available from various manufacturers, such as Xiran® types from Polyscope in Geleen, Netherlands.

In another preferred embodiment, the inventive polymer composition comprises at least one copolymer comprising at least one mono vinyl aromatic monomer and at least one vinyl cyanide monomer (copolymer D2) as component D. According to a preferred embodiment the inventive polymer composition comprises 0 to 20 wt.-%, preferably 2.0 to 20.0 wt.-%, more preferably 4.0 to 13.0 wt.-%, most more preferably 4.0 to 10.0 wt.-%, based on the total polymer composition, of a copolymer D2, comprising at least one mono vinyl aromatic monomer and at least one vinyl cyanide monomer, as further polymeric component D.

Preferably, the optional copolymer D2 is a copolymer of

68.0 to 85.0 wt.-%, 72.0 to 80.0 wt.-%, based on the weight of the copolymer D2, of at least one mono vinyl aromatic monomer, preferably styrene; and

15.0 to 32.0 wt.-%, preferably 20.0 to 28.0 wt.-%, based on the weight of the copolymer D2, of at least one vinyl cyanide monomer, preferably acrylonitrile.

Such copolymers D2 are commonly known as styrene-acrylonitrile (SAN) resins and are commercially available from various manufacturers, such as Luran® types from INEOS Styrolution Group GmbH (Frankfurt, Germany) or TYRIL® types from Trinseo S.A. (Luxembourg).

Preparation of the copolymer D2 can be carried out by substantially any known polymerisation method described for preparation of SAN resins, such as mass, solution, emulsion or bead polymerisation.

Although copolymers D1 and/or D2 of substantially any molecular weight may be employed, use of copolymer D1 and/or D2 having a weight average molecular weight Mw of 60 000 g/mol to 300 000 g/mol, preferably of 100 000 g/mol to 250 000 g/mol has proved to be particularly advantageous in terms of mechanical properties of the composition. The average molecular weight Mw of the copolymer D1 can be determined by GPC with PMMA standards.

Typically, the mono vinyl aromatic monomer in the copolymers D1 and D2 is the same as one of the mono vinyl aromatic monomer mentioned above in connection with the acrylic based polymer A. Suitable mono vinyl aromatic monomers for use in optional copolymer D1 are styrene, alphamethylstyrene, 2-methylstyrene, 3-methylstyrene, 4-methylstyrene, 2-ethylstyrene, 3-ethylstyrene, 4-ethylstyrene, 4-n-propyl- styrene, tert-butylstyrene, 2,4-dimethylstyrene, vinyltoluene, and mixtures thereof. In a preferred embodiment, the mono vinyl aromatic monomer is styrene and/or $\alpha$-methylstyrene, more preferably the mono vinyl aromatic monomer is styrene.

Examples of appropriate vinyl cyanide monomers for use in the present invention, in particular in copolymer D2, include acrylonitrile, methacrylonitrile, ethacrylonitrile, phenylacrylonitrile, fumaronitrile, and the like. These may be used alone or as a mixture thereof. For example, the vinyl cyanide monomer may include acrylonitrile and/or methacrylonitrile. More preferably, the vinyl cyanide monomer is acrylonitrile.

**Optional further component E**

The inventive polymer composition may optionally comprise one or more further component E, preferably selected from non-polymeric components, such as commonly known additives, auxiliaries and/or fillers. Typically, the further component E may be present in an amount of 0.0 to 15.0 wt.-%, preferably 0.0 to 10.0 wt.-%, more preferably 0.0001 to 5.0 wt.-%, also preferably 0.001 to 2.0 wt.-%, based on the total polymer composition.

The polymer composition of the present invention may optionally contain customary additives, auxiliaries and/or fillers, such as, for example, heat stabilisers, processing stabilizer, UV stabilisers, UV absorbers, gamma ray stabilizers, antioxidants, in particular soluble or insoluble dyes or colourants, and plasticizers, provided that the properties of the composition according to the invention are not adversely affected by these additives.

Suitable UV absorbers may be, for example, derivatives of benzophenone, the substituents of which, such as hydroxyl and/or alkoxy groups, are generally present in the 2- and/or 4- position. These include 2-hydroxy-4-n-octyloxybenzophenone, 2,4-dihydroxybenzophenone, 2,2'-dihydroxy-4-methoxybenzophenone, 2,2',4,4'-tetrahydroxybenzophenone, 2,2'-dihydroxy-4,4'-dimethoxybenzophenone, 2-hydroxy-4-methoxybenzophenone.

Particularly suitable UV absorbers include for example benzotriazoles of the general formula (III)

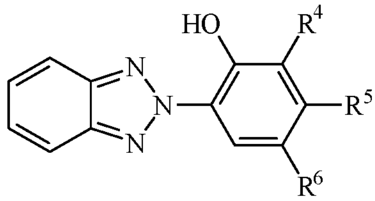

(III)

in which $R^4$, $R^5$ and $R^6$ are independently selected from hydrogen or C1-C12-alkly.

Examples of compounds (III) which are particularly suitable for use in the present invention are 2-(2'-hydroxy-5'-methyl-phenyl)benzotriazole (commercially available by the name Tinuvin® P, commercially available from BASF SE; Ludwigshafen, Germany) or 2-(2'-hydroxy-3'-dodecyl-5'-methyl-decyl)benzotriazole.

Particularly preferred UV absorbers further include the following hydroxyphenylbenztriazole derivatives:

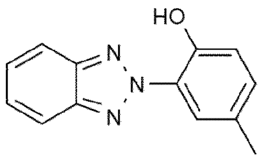

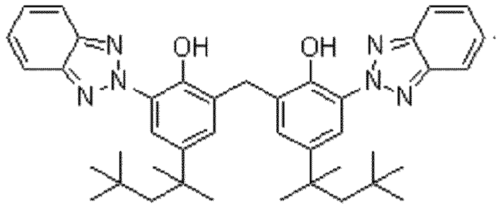

Furthermore, substituted benzotriazoles which are appropriate for use as an added UV absorbers include in particular 2-(2-hydroxy-5-methylphenyl)benzotriazole, 2-[2-hydroxy-3,5-di(alpha,alphadimethylbenzyl)phenyl]benzotriazole, 2-(2-hydroxy-3,5-di-*tert*.-butylphenyl)benzotriazole, 2-(2-hydroxy-3,5-di-*tert*.-amylphenyl)benzotriazole, 2-(2-hydroxy-5-*tert*.-butylphenyl)benzotriazole, 2-(2-hydroxy-3-sec-butyl-5-*tert*.-butylphenyl)benzotriazole and 2-(2-hydroxy-5-*tert*.-octylphenyl)benzotriazole.

UV absorbers which may equally be used are ethyl-2-cyano-3,3-diphenylacrylate, 2-ethoxy-2'-ethyloxalic acid bisanilide, 2-ethoxy-5-*tert*.-butyl-2'-ethyloxalic acid bisanilide and substituted phenyl benzoates.

The UV absorbers may be present in the polymer composition as low molecular weight compounds. However, UV-absorbing groups in the matrix polymer molecules may also be covalently bonded after copolymerisation with polymerisable UV-absorbing compounds, such as, for example, acrylic, methacrylic or allyl derivatives of benzophenone derivatives or benzotriazole derivatives.

As will be readily appreciated by a skilled person, mixtures of chemically different UV absorbers may also be employed.

The total content of the UV absorbers in the polymer composition typically ranges from 0.01 wt.-% to 1.0 wt.-%, especially from 0.01 wt.-% to 0.5 wt.-%, in particular from 0.02 wt.-% to 0.2 wt.-%, based on the total weight of the polymer composition of the present invention.

Examples of suitable free radical scavengers/UV stabilisers include *inter alia* sterically hindered amines, which are known by the name HALS ((Hindered Amine Light Stabiliser). They can be used for inhibiting ageing processes in finishes and plastics, especially in polyolefin plastics (Kunststoffe [Plastics], 74 (1984) 10, pages 620 to 623; Farbe + Lack [Paints + Finishes], 96th year, 9/1990, pages 689 to 693). The tetramethylpiperidine group present in the HALS compounds is responsible for the stabilising effect thereof. This class of compounds may be either unsubstituted or substituted by alkyl or acyl groups on the piperidine nitrogen. The sterically hindered amines do not absorb in the UV range. They trap free radicals formed, which once again the UV absorbers are incapable of doing.

Examples of HALS compounds which have a stabilising effect and can also be used as mixtures are: bis(2,2,6,6-tetramethyl-4-piperidyl) sebacate, 8-acetyl-3-dodecyl-7,7,9,9-tetramethyl-1,3-8-triazaspiro(4,5)decane-2,5-dione, bis(2,2,6,6-tetramethyl-4-piperidyl)succinate, poly(N-β-hydroxyethyl-2,2,6,6-tetramethyl-4-hydroxypiperidine succinic acid ester) and bis(N-methyl-2,2,6,6-tetramethyl-4-piperidyl) sebacate.

The free radical scavengers / UV stabilisers are used in the compositions according to the invention in amounts of 0.01 wt.-% to 1.5 wt.-%, especially in amounts of 0.02 wt.-% to 1.0 wt.-%, in particular in amounts of 0.02 wt.-% to 0.5 wt.-%, based on the totality of all constituents.

Lubricants and mould release agents which can reduce or completely prevent possible adhesion of the moulding material to the injection mould are important for the injection moulding process and may also be employed.

For example, lubricants, selected from the group consisting of saturated fatty acids having less than C20, preferably C16 to C18, carbon atoms or of the saturated fatty alcohols having less than C20, preferably C16 to C18, carbon atoms, may be present as optional further component E. For example, stearic acid, stearyl alcohol, palmitic acid, palmitic alcohol, lauric acid, lactic acid, glycerol monostearate, pentaerythrol, and industrial mixtures of stearic and palmitic acid. Also suitable are n-hexadecanol, n-octadecanol and industrial mixtures of n-hexadecanol and n-octadecanol. A particularly preferred lubricant or mould release agent is stearyl alcohol.

The lubricants are typically used in amounts of not more than 0.35 wt.-%, *e.g.* 0.05 wt.-% to 0.25 wt.-% based on the weight of the polymer composition.

Furthermore, craze resistance and chemical resistance of the moulding composition can be additionally improved if the composition comprises at least one plasticiser as optional further component E. Plasticisers *per se* are familiar to the skilled person and described *e.g.* in Ullmann's Encyclopaedia of Industrial Chemistry, 2012, Plasticisers, D. F. Cadogan etc. For the purpose of the present invention, the plasticisers usually have a molecular weight of from 100 g/mol to 200 000 g/mol and a melting temperature of not more than 40 °C. If a polymeric compound is used as a plasticiser in the moulding composition of the present invention, such polymeric compound should ideally have a glass transition temperature Tg of not more than 40 °C, as measured according to standard ISO 11357-2:2013. Furthermore, to ensure that presence of the plasticisers does not adversely affect optical properties of the polymeric composition, the plasticiser should be miscible with the moulding composition.

Examples of particularly suitable plasticisers include in particular polyethylene glycol having a molecular weight from 500 to 15 000 g/mol, tributyl citrate, 1,2-cyclohexane dicarboxylic acid diisononyl ester (e.g. commercially available as a mixture of isomers under the trademark name Hexamoll® DINCH from BASF SE, Ludwigshafen, Germany), and adipic acid polyester (e.g. commercially available as a mixture of isomers under the trademark name Ultramoll® IV from Lanxess, Leverkusen, Germany). Typically, 1,2-cyclohexane dicarboxylic acid diisononyl ester is a mixture of isomers and usually comprises10 wt.-% n-nonylalcohol, 35-40 wt.-% methyloctylalcohol, 40-45 wt.-% dimethylheptylalcohol und 5-10 wt.-% methylethylhexylalkohol, based on the total weight of isononyl alcohol residues. Some of the additives, as example UV absorber, UV stabilizer, antioxidants and plasticisers, such as adipic acid polyesters, can also improve the colour stability under and after gamma ray exposure.

The plasticisers are typically used in amounts of 0.01 wt.-% to 5.0 wt.-%, preferably 0.05 wt.-% to 3.0 wt.-%, based on the weight of the polymer composition.

In the context of the present invention, addition of the components $c_1$), $c_2$), $c_3$) and / or $c_4$) as described below has also proved particularly useful.

The component $c_1$) designates triaryl phosphites of the general formula (I)

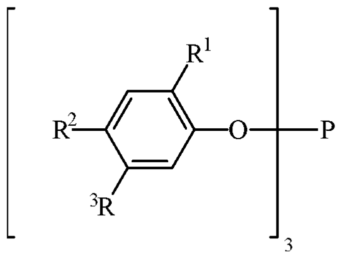

(I)

in which $R^1$ and $R^2$ represent C1-C12-alkyl, such as methyl, ethyl, propyl, 1-methylethyl, n-butyl, 1-methylpropyl, 2-methylpropyl, 1,1-dimethylethyl, n-pentyl, 1-methylbutyl, 2-methylbutyl, 3-methylbutyl, 1,2-dimethylpropyl, 1,1-dimethylpropyl, 2,2-dimethylpropyl, 1-ethylpropyl, n-hexyl, 1-methylpentyl, 2-methylpentyl, 3-methylpentyl, 4-methylpentyl, 1,2-dimethylbutyl, 1,3-dimethylbutyl, 2,3-dimethylbutyl, 1,1-dimethylbutyl, 2,2-dimethylbutyl, 3,3-dimethylbutyl, 1,1,2-trimethylpropyl, 1,2,2-trimethylpropyl, 1-ethylbutyl, 2-ethylbutyl, 1-ethyl-2-methylpropyl, n-heptyl, 1-methylhexyl, 2-methylhexyl, 3-methylhexyl, 4-methylhexyl, 5-methylhexyl, 1-ethylpentyl, 2-ethylpentyl, 1-propylbutyl, octyl, nonyl, decyl, undecyl and dodecyl, preferably C3-C12-alkyl groups branched in 1-position ($\alpha$), in particular C3-C7-alkyl groups, such as 1-methylethyl, 1-methylpropyl, 1,1-dimethylethyl, 1-methylbutyl, 1,2-dimethylpropyl, 1,1-dimethylpropyl, 1-ethylpropyl, 1-methylpentyl, 1,2-dimethylbutyl, 1,3-dimethylbutyl, 1,1-dimethylbutyl, 1,1,2-trimethylpropyl, 1,2,2-trimethylpropyl, 1-ethylbutyl, 1-ethyl-2-methylpropyl, 1-methylhexyl, 1-ethylpentyl and 1-propylbutyl and 1,1,3,3-tetramethylbutyl, 1,1,2,2,5,5-hexamethylhexyl,

C5-C8-cycloalkyl, such as cyclopentyl, cyclohexyl, cycloheptyl and cyclooctyl, preferably cyclohexyl,

C6-C10-aryl and C6-C100-aryl-C1-C4-alkyl, the aryl groups of which may be up to trisubstituted by C1-C4-alkyl, such as phenyl, naphthyl or 2,2-dimethylbenzyl, and $R^3$ denotes hydrogen and C1-C4-alkyl, such as methyl, ethyl, n-propyl, isopropyl, n-butyl, isobutyl, sec-butyl and tert.-butyl, preferably hydrogen and methyl.

Examples of compounds (I) are the commercially available tris(2,4-di-*tert*.-butylphenyl) phosphite (IRGAFOS® 168, commercially available from BASF SE, Ludwigshafen, Germany) and tris(nonylphenyl) phosphite, preferably tris(2,4-di-*tert*.-butylphenyl) phosphite.

The component $c_2$) designates a phenol of the general formula (IV)

$AB_k$ (IV)

in which k denotes 1, 2 or 4 and, if k is 1, A represents $-COOR^7$, $-CONHR^7$

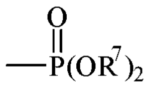

,

$R^7$ denoting C1-C21-alkyl and,
if k is 2, A representing $-CONH-(CH_2)_n-CONH-$,

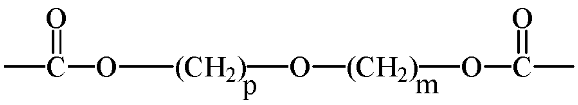

or

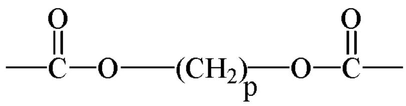

,

in which p and m denote integers from 1 to 10 and, if k is 4, A represents

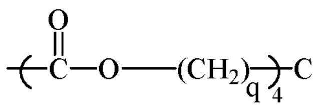

in which q denotes an integer from 1 to 4, and
B represents

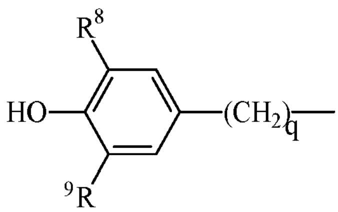

,

in which $R^8$ and $R^9$ represent hydrogen, methyl or tert-butyl.

The addition of the component $c_3$) may lead to a further improvement of the stress cracking resistance.

Examples of compounds $c_3$), which are particularly important with regard to the present invention, are octadecyl 3-(3,5-di-*tert*.-butyl-4-hydroxyphenyl)propionate (commercially available as Irganox® 1076 from BASF SE; Ludwigshafen, Germany) and

IRGANOX® 1098

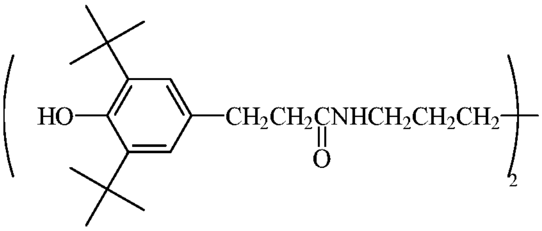

IRGANOX® 1010

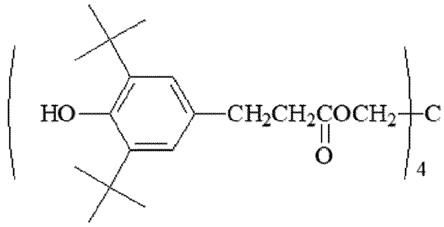

IRGANOX® 1222

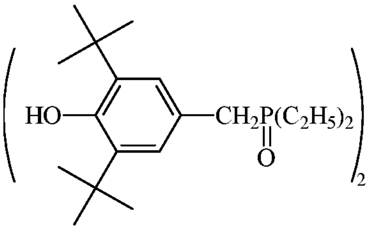

IRGANOX® 245

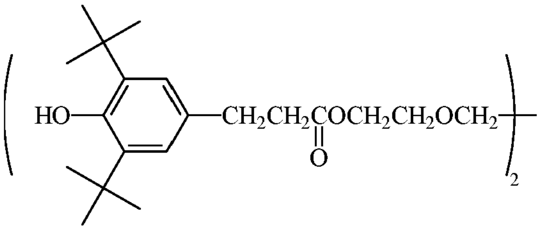

IRGANOX® 259

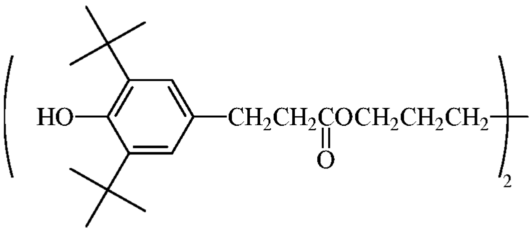

BHT (butyl hydroxytoluene)

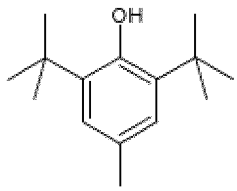

Irganox® 1141

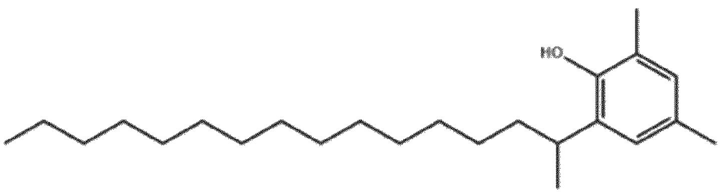

Furthermore, use of the following stabilisers as compounds $c_4$) showed to be particularly advantageous:

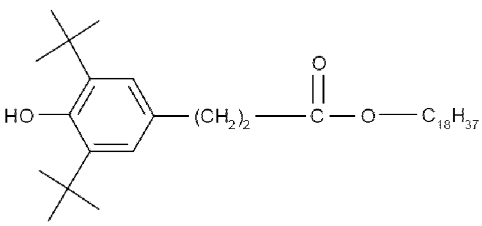

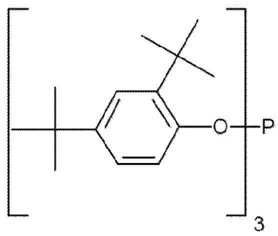

Also thioethers or organic disulfides and sulfides such as di-tert.-dodecyldisulfide, di-tert-butyldisulfide, di-tert.-dodecyldisulfide can be advantageously employed for this purpose.

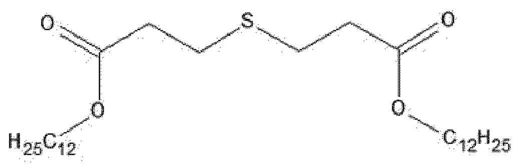

The components $c_1$), $c_2$), $c_3$) and $c_4$) are preferably used as a mixture in order to achieve a synergistic effect with regard to the improvement of the stress cracking resistance after weathering.

The preferred amount of the components $c_1$) to $c_3$) are in each case in the range from 0.01 wt.-% to 1.0 wt.-%, preferably from 0.01 wt.-% to 0.1 wt.-%, based on the total weight of the polymer components A, B, and C and optionally D and/or F. Preferred amount of the component $c_4$) is typically in the range from 0.01 wt.-% to 2.0 wt.-%, preferably from 0.05 wt.-% to 1.0 wt.-%, based on the total weight of the polymer components A, B and C and optionally D and/or F.

**Optional further impact modifier F**

Optionally, the inventive polymer composition may comprise one or more further impact modifiers as component F, in addition to the particulate multiphase graft copolymer C as described above. For example, the optional further impact modifier can be selected from so called thermoplastic impact modifiers, in particular thermoplastic impact modifiers that build up separate domains within the inventive polymer composition, especially within the polymer matrix formed by the acrylic-based polymer A. Typically, the further impact modifier F may be present in an amount of 0.0 to 40.0 wt.-%, preferably 0.0 to 35.0 wt.-%, more preferably 5.0 to 40.0 wt.-%, also preferably 10.0 to 35.0 wt.-%, based on the total polymer composition, of at least one more further impact modifiers F.

Generally, thermoplastic impact modifiers have a different mechanism of action than particulate impact modifiers. They are generally mixed with the matrix material. In the case that domains are formed, as occurs, for example, in the case of use of block copolymers, preferred sizes for these domains, the size of which can be determined, for example, by electron microscopy, correspond to preferred sizes for the core-shell particles.

There are various classes of thermoplastic impact modifiers. For example, aliphatic thermoplastic polyurethanes (TPUs) e.g. Desmopan® products commercially available from Covestro AG, can be used. For instance, the TPUs Desmopan® WDP 85784A, WDP 85092A, WDP 89085A and WDP 89051D, all of which have refractive indices between 1.490 and 1.500, are particularly suitable as impact modifiers.

A further class of thermoplastic polymers for use as further impact modifiers F are methacrylate-acrylate block copolymers, especially acrylic TPE, which comprises PMMA-poly-*n*-butyl acrylate-PMMA triblock copolymers, and which are commercially available under the Kurarity® product name by Kuraray. The poly-*n*-butyl acrylate blocks form nanodomains in the polymer matrix having a size between 10 nm and 20 nm.

A further class of polymers for use as further impact modifiers F are based on styrene-butadiene block copolymers (SBC) optionally included in a polymer matrix, such as acrylic-styrene-copolymers (e.g. Zylar® from Ineos Styrolution) and ethylene-propylene-diene rubbers (EPDM) or grafted EPDM, for example EPDM grafted with an acrylic polymer matrix.

According to a preferred embodiment the inventive polymer composition comprises 5.0 to 40.0 wt.-%, preferably 10.0 to 35.0 wt.-%, based on the total polymer composition, of at least one further impact modifier F, preferably selected from thermoplastic impact modifiers, such as aliphatic thermoplastic polyurethanes (TPUs), methacrylate-acrylate block copolymers, styrene-butadiene block copolymers (SBC), and ethylene-propylene-diene rubbers (EPDM).

**Properties of the polymer composition**

As already mentioned above, the polymer composition of the present invention has an excellent stress cracking resistance in the presence of common disinfectants, in particular alcohol or water/alcohol mixtures, oils and fats. In particular the polymer composition shows improved stress cracking resistance in the presence of oils and fats including emulsions comprising soybean oil, glycerine and/or water and an emulsifier, e.g. phospholipids. For example, an oils and fats test liquid may be Intralipid® emulsion, commercially available from Fresenius Kabi Austria GmbH.

Additionally, the polymer composition of the present invention has an excellent transparency and a substantially non-cloudy appealing appearance. In a preferred embodiment the polymer composition has a haze of equal or less than 70 %, preferably equal or less than 60 %, also preferably equal or less than 50 %, more preferably equal or less than 40 %, measured at 23 °C on an injection moulded specimen having a thickness of 3 mm according to standard ASTM D1003 (2013).

Furthermore, the polymer composition retains its excellent transparency even in the presence of common disinfectants, oils and fats and has a particularly low increase of haze under these conditions. Typically, exposure of a specimen having a thickness of 3 mm to isopropanol water mixture (63.0 wt.-% isopropanol, 37.0 wt.-% water) for at least 48 h at 23 °C, preferably for 72 h at 23 °C, more preferably for 96 h at 23 °C, results in an increase of the haze of not more than 40 %, preferably not more than 25%, even more preferably not more than 20 %.

Furthermore, the polymer composition preferably shows a light transmittance, TD65 according to DIN 5033 - 7 (2014) in the range of 40 to 93 %, in particular in the range of 65 to 92 %, measured at 23 °C on an injection moulded specimen having a thickness of 3 mm.

The yellowness index of the polymer composition, determinable according to DIN 6167 (1980) (illuminant $D_{65}$,

10° on 3 mm layer thickness) should preferably be less than 15, preferably less than 8 (typically of a not coloured polymer), measured at 23 °C on an injection moulded specimen having a thickness of 3 mm.

The Vicat softening temperature of the polymer composition according to ISO 306-B50 (2014) is advantageously at least 60 °C, preferably at least 70 °C, more preferably at least 75 °C.

The nominal elongation at break of the polymer composition according to ISO 527 (2012) should preferably be at least 3.0 %, particularly preferably at least 5.0 %.

The modulus of elasticity of the polymer composition according to ISO 527 (2012) is advantageously greater than 1500 MPa, preferably greater than 1700 MPa.

Due to its advantageous rheological properties, the polymer composition of the present invention is highly suitable for manufacturing of medical grade articles by means of injection moulding. The composition of the present invention typically has a melt volume flow rate MVR measured according to ISO 1133 (2012) at 230 °C and 5.0 kg, of greater than 0.3 $cm^3$/10 min, preferably greater than 0.5 $cm^3$/10 min, more preferably greater than 0.7 $cm^3$/10 min, most preferably in the range from 1.0 to 12.0 $cm^3$/10 min.

Preferably, the inventive polymer composition has one or more of the following properties (i)-(iv):

(i) a Vicat softening temperature according ISO 306-B50 (2014) of at least 60 °C, preferably at least 70 °C, more preferably at least 75 °C;

(ii) a nominal elongation at break according to ISO 527 (2012) of at least 3.0 %, particularly preferably at least 5.0 %;

(iii) a modulus of elasticity according to ISO 527 (2012) of greater than 1500 MPa, preferably greater than 1700 MPa;

(iv) a light transmittance (TD65) according to DIN 5033 - 7 (2014) of at least 40%, preferably of at least 60%, more preferably of at least 65%, measured at 23 °C on an injection moulded specimen having a thickness of 3 mm.

**Preparation of the composition and of the moulded articles**

Further, the present invention is directed to a process for manufacturing the inventive polymer composition as described above, wherein the process comprises mixing the component A, B, C and optionally D, E and/or F, preferably melt mixing the component A, B, C and optionally D, E and/or F.

The composition of the present invention can be prepared by dry blending the components described above, which may be present as powder, particles or preferably pellets.

The composition of the present invention can also be prepared by mixing the components B and C either at the same time or successively into the melt of polymer A and optionally D and/or F. The composition can also be prepared by melting and mixing the individual components in the molten state or by melting dry premixes of the individual components to give a ready-to-use moulding material. For example, this can be carried in single-screw or twin-screw extruders. The extrudate obtained can then be granulated. Customary additives, auxiliaries and/or fillers can be directly admixed or added later by end users as required.

The composition according to the invention is suitable as a starting material for the production of moulded articles, for example for medical use, having improved resistance to chemicals and stress cracking resistance and which are transparent. The forming of the composition can be done via methods known *per se,* for example by processing via the elastoviscous state, *i.e.* by kneading, rolling, calendering, extrusion or injection moulding, extrusion and injection moulding, in particular injection moulding, being particularly preferred here.

The injection moulding of the composition can be carried out in a manner known *per se* at temperatures in the range of 220 °C - 280 °C (melt temperature) and a mould temperature of preferably 60 °C to 90 °C.

The extrusion is preferably carried out at a temperature of 220 °C to 280 °C.

A further aspect of the present invention relates to a moulded article comprising the polymer composition as described above, in particular for applications where a high chemical resistance and chemical stress cracking resistance is required.

In a particularly preferred embodiment, the moulded article is a medical device, preferably a disposable medical device, for example selected from medical diagnostic devices, intravenous and catheter accessory, blood handling devices, chest drainage units, respiratory ventilating devices, medical filter housings, permanent device housings, tubes, connectors, fittings, and cuvettes. Said devices include but are not limited to luer locks, Y-sites, spikes, fittings, nozzles, protection caps and covers, blood plasma separators, collection and specimen vessels, needle hubs and adapters, catheter accessories, chest drainage units, valve assemblies, meter housings, flow controls, filter housings, drip chambers, intravenous adapters, yankauers, rigid tubes, diagnostic cuvettes, diagnostic test packs, diagnostic rotors, optical sensor viewports, microfluidic devices, bracheotherapy needle hubs, inhalation mouthpieces and spacers.

In a particularly preferred embodiment, the moulded article is selected from articles for parts of household devices; parts of communications devices; electronic component parts; parts of equipment for hobbies; parts of equipment for sports; parts of gardening equipment; exterior and interior parts of automobiles, ships or aircraft; parts of bodywork component employed in the construction of automobiles, ships or aircraft; parts in sanitary and bath equipment.

**Description of the figure**

Figure 1 illustrates the set-up of the chemical stress cracking resistance test as described in the experimental examples. The test specimen (2) having the thickness h is fixed on the bent form (3) having a curved surface with radius r, wherein the test specimen (2) is fixed via two clamps (1). $\varepsilon_x$ is the nominal strain of surface.
Figure 2 shows shape of the test specimen (2) fixed with the two clamps (1) on the bent form (3).

The following examples explain the present invention in more detail without being intended to limit the concept of the invention.

**Examples**

I. **Preparation of polymer compositions**

The polymer compositions of examples 1-12 were prepared from dry blends of the individual components by means of a tumbling mixer. The dry mixture was compounded on a Leistritz LSM 30 twin-screw extruder at 240 °C barrel temperature and 12 kg/h output with 150 rp screw speed. The compositions of Examples 1 to 10 are summarized in Table 1. The components A, B, C, optional D and optional F are described in the following.

II. **Components of polymer compositions**

The acrylic-based polymers A1 and A2, the PE-MAH graft copolymers B1 and B2, the particulate multiphase graft copolymers (impact modifiers) C1 and C2, optional SAN copolymer D2 and optional additive F as described in the following were used.

A1: Acrylic-based polymer A1, copolymer comprising about 75.0 wt.-% MMA, 15.0 wt.-% styrene and 10.0 wt.-% maleic anhydride (preparation as described below);
A2: Acrylic-based polymer A2, polymethylmethacrylate resin consisting of 97 wt.-% methyl methacrylate and 3 wt.-% of methyl acrylate having molecular weight average $M_w$ of about 110.000g/mol (polymethylmethacrylate without impact modifier);
A3: Acrylic-based polymer A3, (meth) acrylic-based polymer comprising a particulate core-shell-shell impact modifier (preparation as described below), i.e. the component A3 includes the components A (acrylic based polymer) and C (particulate multiphase graft copolymer);
B1: Polyolefin graft copolymer B, Modic 814E (Mitsubishi Chemical/Japan), LLDPE polyethylene grafted with maleic anhydride (MAH), with an amount of MAH of > 1.0 wt.-% (PE-g-MAH);
B2: Polyolefin graft copolymer B, Scona TPPE 5002 GALL (BYK/Deutschland), LLDPE polyethylene grafted with maleic anhydride, with an amount of MAH of > 1.0 wt.-% (PE-g-MAH);
C1: Impact Modifier C, Kane Ace® M731 (Kaneka/USA), core-shell copolymer including a polybutadiene core grafted with a polymethylmethacrylate shell;
C2: Impact Modifier C, Kane Ace® M711 (commercially available from Kaneka Corp., Takasago, Japan), core-shell copolymer including a polybutadiene core grafted with a polymethylmethacrylate shell;
D2: Optional copolymer D2, styrene acrylonitrile copolymer (SAN) comprising 76.0 wt.-% styrene and 24.0 wt.-% acrylonitrile;
E1: Optional additive E, polyethylenglycol PEG3350 having a molecular weight of about 3350 (Dow Chemical / USA).

Table 1: Polymer compositions (all amounts given in wt.-%, based on the total polymer composition)

| Ex. | A1 | A2 | A3** | B1 | B2 | C1 | C2 | D2 | E1 |
|---|---|---|---|---|---|---|---|---|---|
| 1 | 63.0 | | | 5.0 | | | 30.0 | | 2.0 |
| 2 | 59.0 | | | 5.0 | | | 30.0 | 4.0 | 2.0 |
| 3 | 60.8 | | | 5.0 | | 30.0 | | 4.2 | |
| 4 | 59.0 | | | | 5.0 | 30.0 | | 4.0 | 2.0 |

(continued)

| Ex. | A1 | A2 | A3** | B1 | B2 | C1 | C2 | D2 | E1 |
|---|---|---|---|---|---|---|---|---|---|
| 5* | 61.0 | | | | | | 30.0 | 7.0 | 2.0 |
| 6* | 61.0 | | | | | 30.0 | | 7.0 | 2.0 |
| 7 | | | 96.0 | 4.0 | | | | | |
| 8* | 96.0 | | | 4.0 | | | | | |
| 9* | 87.0 | | | | 4.0 | | | 9.0 | |
| 10* | | 96.0 | | 4.0 | | | | | |
| 11 | | | 94.0 | 4.0 | | | | | 2.0 |
| 12* | | | 100.0 | | | | | | |
| * Comparative examples<br>**A3=Blend of PMMA (component A) and impact modifier (component B) | | | | | | | | | |

**III. Preparation of components**

a. Preparation of acrylic-based polymer A1

The copolymer A1 comprising 75.0 wt.-% MMA, 15.0 wt.-% styrene and 10.0 wt.-% maleic anhydride was prepared according to the procedure described in DE 44 40 219 A1.

The starting materials employed for the preparation were as follows:

| | |
|---|---|
| 74.638 g | methyl methacrylate |
| 15.00 g | styrene |
| 10,00 g | maleic anhydride |
| 0.33 g | n-dodecylmercaptane |
| 0.034 g | tert-butyl peroxyneodecanoate |
| 0.01 g | tert-butyl peroxyisononanoate |

The starting materials were placed into Hostaphan® polyester bags, polymerized in a water bath (12 h at 52 °C, followed by 16 h 44 °C) and then tempered in a tempering furnace (6 h at 110 °C). Finally, the resulting copolymer A was milled and degassed using an extruder.

The obtained copolymer A1 had a molecular weight Mw of about 150 000 g/mol, measured using GPC with PMMA as a standard (as described below), and had a solution viscosity in chloroform at 25 °C (ISO 1628 - part 6) of about 72 ml/g.

b. Preparation of acrylic based polymer A3 (impact modified PMMA)

The particulate core-shell-shell impact modifier of A3 was prepared as follows:
In a polymerization vessel equipped with stirrer, feeding vessel and external cooling a water phase containing acetic acid, iron (II) sulfate (FeSO4) and seed, containing 10 percent by weight of PMMA, was placed. At a temperature of 52 °C (vessel outside temperature) emulsion I as described below was added over a time period of 1 hour. In parallel 0.69 g sodium metabisulfite in 20 g water was added (during the first 10 min). After 15 min, 1.94 g sodium metabisulfite in 100 g water was added within 10 min parallel to the start of the addition of emulsion II as described below. Emulsion II was added within 2h followed by a 50 min break. Emulsion III as described below was added simultaneously with 0.62 g sodium metabisulfite in 50 g water. The addition of sodium metabisulfite was finished within 10 min, emulsion III after 1h. Afterwards the reaction mixture was stirred for 30 min, cooled to 35 °C and filtered over VA-steel (mesh size 100 μm).

The emulsions I, II and III were each obtained by emulsifying the monomers and components (given in weight parts) as follows:

| | |
|---|---|
| Water phase | |
| Water | 1691.00 |
| Acetic acid | 0.10 |

(continued)

| | |
|---|---|
| Water phase | |
| $FeSO_4$ | 0.0034 |
| Seed | 5.30 |
| Emulsion I | |
| Water | 732.69 |
| Radical initiator | 0.51 |
| Surfactant | 4.67 |
| Ethyl acrylate | 29.40 |
| Methyl methacrylate | 703.47 |
| Crosslinker | 2.21 |
| Emulsion II | |
| Water | 628.65 |
| Radical initiator | 1.44 |
| Surfactant | 7.46 |
| Butyl acrylate | 1218.72 |
| Crosslinker | 19.53 |
| Styrene | 262.87 |
| Emulsion III | |
| Water | 381.56 |
| Radical initiator | 0.44 |
| Surfactant | 1.34 |
| Ethyl acrylate | 38.35 |
| Methyl methacrylate | 920.45 |
| Chain transfer agent | 3.36 |

The obtained latex was coagulated via freeze coagulation, dewatered and dried.

The obtained impact modifier polymer powder was melt compounded with a polymethylmethacrylate resin consisting of 97 wt.-% methyl methacrylate and 3 wt.-% of methyl acrylate having molecular weight average Mw of about 150.000g/mol, wherein the amount of impact modifier was about 19 wt.-%, based on the total polymer blend. The polymer blend was mixed at a temperature of 220-230 °C (30 rpm). The resulting melt was removed from the chamber and crushed with pliers.

**IV. Results**

Test specimens were prepared from the polymer compositions according to examples 1-12 via injection moulding (details are described below). Melt volume flow rate (MVR), Vicat softening temperature (B50), optical properties (haze, transmittance (TD65)), tensile properties (Elongation at break (Elong@break); tensile modulus (E), tensile strength max ($TS_{max}$)) as well as chemical resistance (stress cracking resistance) against alcohol and against fat were determined as described below. Unless otherwise indicated, all test specimens were stored for at least 24 h at 23 °C/ 50 % relative humidity before the tests. Unless otherwise indicated, the tests were performed at 23 °C / 50% relative humidity.

The results are summarized in the following tables 2 and 3.

Table 2: Test results examples 1-12

| Ex | Haze | TD65 | MVR 5 kg, 230 °C) | Vicat B50 | Elong@ break | E | $TS_{max}$ |
|---|---|---|---|---|---|---|---|
| | % | % | ml/10min | °C | % | MPa | MPa |
| | | | | | Without IPA/H2O exposure, 0 % strain | | |
| 1 | 12 | 83 | 0.85 | 105 | 19 | 1760 | 44.6 |
| 2 | 26 | 77 | 1.1 | 105 | 20 | 1800 | 45.4 |
| 3 | 40 | 70 | 0.8 | 106 | 11 | 1900 | 47.4 |
| 4 | 24 | 72 | 1.4 | 102 | 10 | 1920 | 45.4 |

(continued)

| Ex | Haze | TD65 | MVR 5 kg, 230 °C) | Vicat B50 | Elong@ break | E | $TS_{max}$ |
|---|---|---|---|---|---|---|---|
| | % | % | ml/10min | °C | % | MPa | MPa |
| | | | | | Without IPA/H2O exposure, 0 % strain | | |
| 5* | 11 | 83 | 1.4 | 103 | 10 | 1950 | 51.0 |
| 6* | 9 | 83 | 1.5 | 101 | 9.5 | 2100 | 50.3 |
| 7 | 38 | 82 | 5.3 | 99 | 24 | 2270 | 61.0 |
| 8* | white | - | 2.0 | 118 | | | |
| 9* | white | - | 1.9 | 117 | | | |
| 10* | white | | 4.2 | 107 | 3.9 | 3190 | 71 |
| 11 | 38 | 75 | 1.9 | 97 | 20.3 | 2260 | 56.2 |
| 12* | 2 | 91 | 1.2 | 101 | 27.1 | 2480 | 62.5 |
| * Comparative examples | | | | | | | |

Table 3: Test results (chemical resistance)

| Ex | Elong @break | E | $TS_{max}$ | Elong @break | E | $TS_{max}$ | Elong @break | E | $TS_{max}$ |
|---|---|---|---|---|---|---|---|---|---|
| | % | MPa | MPa | % | MPa | MPa | % | MPa | MPa |
| | IPA/H2O exposure, 0.5 % strain | | | IPA/H2O exposure, 0.75 % strain | | | Intralipid 20 exposure, 1.0 % strain | | |
| 1 | 20 (d) | 1760 | 44.6 | 23 (d) | 1710 | 44.3 | 4.5 | 1714 | 43.0 |
| 2 | 20 (d) | 1800 | 45.4 | 25 (d) | 1790 | 45.3 | | | |
| 3 | 11 (d) | 1900 | 47.4 | 11 (d) | 1890 | 40.0 | | | |
| 4 | 10 (d) | 1880 | 44.4 | 7 (d) | 1870 | 37.2 | 9.0 | 1810 | 43.2 |
| 5* | 11 (d) | 1910 | 50.1 | 1.3 (b) | 1930 | 27.1 | | | |
| 6* | 9.8 (d) | 2100 | 49.0 | 0.7 (b) | 2000 | 15.2 | | | |
| 11 | 19.8 | 2092 | 45.7 | | | | | | |
| 12* | br | br | br | | | | | | |
| * Comparative examples<br>br=broken on the bent form during testing<br>d = ductile break / b = brittle break | | | | | | | | | |

The inventive examples 1-4, including polybutadiene core-shell impact modifiers (C1 or C2) and polyethylene maleic anhydride graft copolymer PE-MAH (B1 or B2), exhibit a high transmittance (TD65) and a low haze. Further, the stress cracking resistance of all examples 1-4 is high, all tensile bars shows ductile break in the tensile tests (at 0.5 % strain and at 0.75 % strain). The comparative examples 5 and 6 (without polyethylene maleic anhydride graft copolymer C1 or C2) exhibit high transparency and low haze as well. However, a sufficient stress cracking resistance is only given at 0.5 % strain, under harsher conditions (0.75 % strain) all tensile bars show brittle break as well as lower elongation and tensile strength at break in the tensile tests. Thus, the stress cracking resistance against alcohol (see 0.75 % strain) according to inventive examples 1-4 is higher than the stress cracking resistance of the comparative examples 5-6 (without component B, PE-MAH). Furthermore, it has been found that this advantageous higher chemical stress cracking resistance became visible using the specific chemical resistance testing as described involving adjustable harsher conditions.

The test specimens according to comparative examples 8 and 9, which have similar polymer matrix as examples 1-4 (A1 or A1+D1) and comprising PE-MAH (B1 or B2) but without the impact modifier (C1 or C2), are not transparent (white). A similar result is shown comparing inventive example 7 and comparative example 10. Both examples are based on a PMMA matrix polymer (A2 or A3) and comprise 4 wt% of PE-MAH (B1). However, the polymer composition of example 7 incudes a particulate core-shell-shell impact modified (component A3 is impact modified PMMA). The polymer composition of inventive example 7 is transparent (having high transmittance TD65), whereas the polymer composition

of comparative example 10 is not transparent (white). Thus, it has surprisingly found that a transparent polymer composition can be obtained when an acrylic-based polymer is mixed with an PE-MAH in combination with a particulate impact modifier (e.g. C1 or C2).

Furthermore, it is demonstrated that an improved stress cracking resistance is obtained in impact modified polymer compositions based on PMMA polymer A3 by addition of PE-MAH component B. The stress cracking resistance against alcohol (see 0.5 % strain) according to inventive examples 11 (impact modified PMMA A3 + PE-MAH B1 + PEG E1) is higher than the stress cracking resistance of the comparative example 12 (100 % impact modified PMMA A3). All of five test bars were broken after IPA/H2O exposure at 0.5 % strain in comparative example 12.

## V. Test methods

a. GPC Measurement conditions:

| | |
|---|---|
| Eluent: | THF (HPLC-Grade) + 0.2 vol.-% TFA |
| Flow rate: | 1 ml / min |
| Injected volume : | 100 µl |
| Detection: | RI HPS |
| Concentration sample solution: | 2 g/l |
| Standard: | PMMA |

### b. Optical, mechanical and other properties

The haze of the polymer composition was measured at 23 °C on an injection moulded specimen having a thickness of 3 mm according to standard ASTM D1003.

The light transmittance (TD65) of the polymer composition was measured at 23 °C on an injection moulded specimen having a thickness of 3 mm according to DIN 5033-7 (2014).

The melt volume flow rate MVR was measured according to ISO 1133 (2012) at 230 °C and a load of 5.0 kg.

The Vicat softening temperature of the polymer compositions was determined according to ISO 306-B50 (2014).

The tensile properties of the polymer compositions were determined according to ISO 527-1:2012 using test specimens (tensile bars) prepared via injection moulding in accordance with ISO 294-1:2016. The elongation at break, tensile modulus, and tensile strength (ultimate tensile strength or tensile strength at break) are summarized in the tables 2 and 3 above. The nominal elongation at break of the polymer composition according to ISO 527 (2012) should preferably be at least 4.0 %, particularly preferably at least 5.0 %. The modulus of elasticity of the polymer composition according to ISO 527 (2012) is advantageously greater than 1500 MPa, preferably greater than 1700 MPa.

### c. Determination of chemical stress cracking resistance

The stress cracking resistance against alcohols was determined via the bent strip procedure ISO 22088-3 as follows:

Five tensile bars according to ISO 294-1:2016 were prepared from each polymer composition via injection moulding at 250 °C. Afterwards the tensile bars were annealed at about 70-80 °C for 2 hours (20 K below the Vicat B50 softening temperature depending on polymer).

The test specimen (dimensions 160 mm x 20 mm x thickness h = 4 mm) rested flat on a bent form. The specific experimental setup is illustrated schematically by Figures 1 and. Fig. 2. As shown in Figure 1, each tensile bar (test specimen (2)) was fixed via two clamps (1) on a bent form (3) having a curved surface with radius r, wherein a strain of 0,5% or 0,75% was applied.

The strain is given as nominal strain $\varepsilon_x$ in outer tensile surface and is calculated as in ISO 22088-3 (2006):

$$\varepsilon_x = \frac{h}{2r+h}$$

with r is the radius of the bent form and h is the thickness of the test specimen (see Figure 1).

The test bars being fixed on the bent form were exposed to a mixture of 63.0 wt.-% isopropanol (IPA) and 37.0 wt.-

% water. For this purpose a cotton cloth (50mm x 8mm) saturated with the mixture (63.0 wt.-% isopropanol (IPA) and 37.0 wt.-% water) was placed in the middle of the top of the bar, afterwards the bent form with the fixed bar covered with the cotton cloth was put in a closed polyethylene bag of approx. 4 liter volume together with an open 100ml glass filled with a mixture of 63.0 wt.-% isopropanol (IPA) and 37.0 wt.-% water. The arrangement was kept in the closed polyethylene bag for 5 hours at 23°C.

The bent form was removed out of the polyethylene bags, the cotton cloth was removed, and the tensile bar was removed out of the bent form. 2 hours after removal the tensile properties of the tensile bar was measured according to ISO 527-1:2012. The results were averaged over the five test bars. The results are summarized in table 3 above.

A high chemical resistance is given when the surface of the tensile bar shows no defects after 5 hours procedure as described above, and the tensile bar shows ductile break under tensile stress.

The stress cracking resistance against fats was determined as follows:
As a test liquid Intralipid® 20% emulsion (commercially available from Fresenius Kabi Austria GmbH) was employed. Intralipid® 20% is a sterile fat emulsion having a pH of 8, an osmolality of approx. 350 mosmol/kg and comprising 20 % soybean oil, 1.2 % egg yolk phospholipids, 2.25 % glycerine and water. Five tensile bars were prepared and annealed as described above.

According to the procedure as described above, each tensile bar was fixed on a bent form having a curved surface wherein a strain of 1.0 % was applied (see Figure 1). The test bars being fixed on the bent form were exposed to test liquid Intralipid® 20%. For this purpose, a cotton cloth (50mm x 8mm) saturated with Intralipid® 20% was placed in the middle of the top of the bar. The arrangement was kept for 24 hours at 23°C. The cotton cloth was removed, and the tensile bar was removed out of the bent form. 2 hours after removal the tensile properties of the tensile bar was measured according to ISO 527-1:2012. The results are summarized in Table 3 above.

**d. Immersion tests with water isopropanol mixture**

Specimen of examples 1-4 were tested using mixture comprising 63.0 wt.-% isopropanol (IPA) and 37.0 wt.-% water. The immersion test duration was 72 hours at 23 °C. Subsequently a visual evaluation of the specimens took place. The results are summarized in table 4. All test specimens of inventive polymer compositions showed a transparent appearance.

Table 4: Test results immersion tests

| Ex. | Test medium | Appearance after 72 hours |
|---|---|---|
| 1 | isopropanol / water | Transparent |
| 2 | isopropanol / water | Transparent |
| 3 | isopropanol / water | Transparent |
| 4 | isopropanol / water | Transparent |

## Claims

**1.** Polymer composition comprising, based on the weight of the polymer composition, the following components A, B and C:

A. 40.0 to 94.5 wt.-%, preferably 50.0 to 84.0 wt.-%, of at least one acrylic-based polymer comprising at least one alkyl(meth)acrylate;
B. 0.5 to 12.0 wt.-%, preferably 1.0 to 10.0 wt.-%, of at least one olefinic copolymer B, comprising at least one olefinic monomer and at least one polar monomer selected from unsaturated carboxylic acids, esters of unsaturated carboxylic acids, and anhydrides of unsaturated carboxylic acids;
C. 5.0 to 40.0 wt.-%, preferably 10.0 to 36.0 wt.-%, of at least one particulate multiphase graft copolymer, which comprises a core and at least one shell, comprising at least one alkyl(meth)acrylate.

**2.** Polymer composition according to Claim 1, wherein the polymer composition has a haze of equal or less than 70 %, measured at 23 °C on an injection moulded specimen having a thickness of 3 mm according to standard ASTM D1003.

**3.** Polymer composition according to Claim 1 or 2, wherein the polymer composition

comprises up to 50.0 wt.-%, based on the total polymer composition, of at least one further polymeric component D selected from

copolymers D1 comprising at least one mono vinyl aromatic monomer and at least one carboxylic acid anhydride monomer; and

copolymers D2 comprising at least one mono vinyl aromatic monomer and at least one vinyl cyanide monomer.

**4.** Polymer composition according to any of Claims 1 to 3, wherein the acrylic-based polymer A comprises from 40.0 to 100.0 wt.-%, preferably from 45.0 to 100.0 wt.-%, more preferably from 55.0 to 99.5 wt.-%, based on the total weight of the acrylic-based polymer A, of at least one alkyl methacrylate monomer having from 1 to 20, preferably from 1 to 12, more preferably from 1 to 8, most preferably from 1 to 4, carbon atoms in the alkyl group.

**5.** Polymer composition according to any of Claims 1 to 4, wherein the acrylic-based polymer A is a thermoplastic (meth) acrylate polymer, which comprises:

50.0 to 100.0 wt.-%, preferably 65 to 99 wt.-%, of at least one alkyl(meth)acrylate, preferably methyl methacrylate;

0.0 to 20.0 wt.-%, preferably 0.1 to 4 wt.-%, of at least one alkyl(meth)acrylate other than methyl methacrylate, preferably selected from C1-C10 alkyl acrylates;

0.0 to 40 wt.-%, preferably 5.0 wt.-% to 30.0 wt.-%, of at least one vinyl aromatic monomer, preferably styrene; and

0.0 to 20 wt.-%, preferably 5.0 to 20.0 wt.-%, of one or more other co polymerizable monomer, preferably selected from unsaturated carboxylic acid anhydride

wherein all amounts are given based on the total weight of the acrylic-based polymer A.

**6.** Polymer composition according to any of Claims 1 to 5, wherein the acrylic-based polymer A is a copolymer of:

48.0 to 90.0 wt.-%, preferably 63.0 to 81.0 wt.-% of at least one alkyl(meth)acrylate, preferably methyl methacrylate;

8.0 to 35.0 wt.-%, preferably 12.0 to 22.0 wt.-% of at least one mono vinyl aromatic monomer; and

2.0 to 17.0 wt.-%, preferably 7.0 to 15.0 wt.-% of at least one unsaturated carboxylic acid anhydride, preferably maleic anhydride;

wherein all amounts are based on the total weight of the acrylic-based polymer A.

**7.** Polymer composition according to any of Claims 1 to 6, wherein the at least one olefinic copolymer B is a polyolefin graft copolymer, which comprises at least one polyolefin base polymer grafted with at least one polar monomer selected from unsaturated carboxylic acids, esters of unsaturated carboxylic acids, and anhydrides of unsaturated carboxylic acids.

**8.** Polymer composition according to any of Claims 1 to 7, wherein the at least one olefinic copolymer B is a polyolefin graft copolymer, which comprises at least one polyolefin base polymer grafted with 0.5 to 3.0 wt.-%, preferably from 0.7 to 2.5 wt.-%, based on the weight of the graft copolymer B, of the at least one polar monomer selected from anhydrides of unsaturated carboxylic acids, preferably maleic anhydride.

**9.** Polymer composition according to any of Claims 1 to 8, wherein the particulate multiphase graft copolymer C comprises:

a butadiene-based core, comprising at least 65.0 wt.-%, preferably at least 75.0 wt.-%, based on the weight of the butadiene-based core, polybutadiene; and

an outer shell, comprising 60.0 wt.-% to 100.0 wt.-%, preferably 65.0 wt.-% to 100.0 wt.-%, based on the weight of the outer shell, of at least one alkyl(meth)acrylate, and 0.0 wt.-% to 40.0 wt.-%, preferably 0.0 wt.-% to 35.0 wt.-%, based on the weight of the outer shell, of at least one aromatic vinyl monomer.

**10.** Polymer composition according to any of Claims 1 to 8, wherein the particulate multiphase graft copolymer C is selected from graft copolymers based on an elastomeric crosslinked alkyl (meth)acrylate core and comprises:

at least 40 wt.-%, preferably 40 to 70 wt.-%, of at least one C1-C10 alkyl methacrylate, preferably methyl methacrylate;

5 to 45 wt.-%, preferably 20 to 45 wt.-%, preferably 25 to 42 wt.-%, of at least one C1-C10 alkyl acrylate;

0 to 2 wt.-%, preferably 0.1 to 2 wt.-%, more preferably 0.5 to 1 wt.-%, of at least one crosslinking monomer; and

0 to 15 wt.-%, preferably 0 to 10 wt.-%, more preferably 0.5 to 5 wt.-%, of optionally further monomers.

**11.** Polymer composition according to any of Claims 1 to 10, wherein the polymer composition comprises 5.0 to 40.0 wt.-%, preferably 10.0 to 35.0 wt.-%, based on the total polymer composition, of at least one further impact modifier F, selected from thermoplastic impact modifiers, such as aliphatic thermoplastic polyurethanes, methacrylate-acrylate block copolymers, styrene-butadiene block copolymers, and ethylene-propylene-diene rubbers.

**12.** Process for manufacturing a polymer composition according to any of Claims 1 to 11,
wherein the process comprises mixing the component A, B, C and optionally D, E and/or F, preferably melt mixing the component A, B, C and optionally D, E and/or F.

**13.** Process for manufacturing of a moulded article from polymer composition according to any of Claims 1 to 11, wherein the process comprises a step of injection moulding of said composition.

**14.** Moulded article comprising a polymer composition according to any of Claims 1 to 11.

**15.** Moulded article according to Claim 14, wherein the moulded article is a medical device, preferably a disposable medical device, for example selected from medical diagnostic devices, intravenous and catheter accessory, blood handling devices, chest drainage units, respiratory ventilating devices, medical filter housings, permanent device housings, tubes, connectors, fittings, and cuvettes; or the moulded article is selected from parts of household devices; parts of communications devices; electronic component parts; parts of equipment for hobbies; parts of equipment for sports; parts of gardening equipment; exterior and interior parts of automobiles, ships or aircraft; parts of bodywork component employed in the construction of automobiles, ships or aircraft; parts in sanitary and bath equipment.

**16.** Use of polymer composition according to any of Claims 1 to 11 in a medical device, preferably a disposable medical device, for example selected from medical diagnostic devices, intravenous and catheter accessory, blood handling devices, chest drainage units, respiratory ventilating devices, medical filter housings, permanent device housings, tubes, connectors, fittings, and cuvettes.

## Patentansprüche

**1.** Polymerzusammensetzung, die, basierend auf dem Gewicht der Polymerzusammensetzung, die folgenden Komponenten A, B und C umfasst:

A. 40,0 bis 94,5 Gew.-%, vorzugsweise 50,0 bis 84,0 Gew.-% von mindestens einem Polymer auf Acrylbasis, umfassend mindestens ein Alkyl(meth)acrylat;
B. 0,5 bis 12,0 Gew.-%, vorzugsweise 1,0 bis 10,0 Gew.-% von mindestens einem olefinischen Copolymer B, umfassend mindestens ein olefinisches Monomer und mindestens ein polares Monomer ausgewählt aus ungesättigten Carbonsäuren, Estern von ungesättigten Carbonsäuren und Anhydriden von ungesättigten Carbonsäuren;
C. 5,0 bis 40,0 Gew.-%, vorzugsweise 10,0 bis 36,0 Gew.-% von mindestens einem partikelförmigen mehrphasigen Pfropfcopolymer, das einen Kern und mindestens einen Mantel umfasst, umfassend mindestens ein Alkyl(meth)acrylat.

**2.** Polymerzusammensetzung nach Anspruch 1, wobei die Polymerzusammensetzung eine Trübung gleich oder kleiner als 70 % aufweist, gemessen bei 23 °C an einem spritzgegossenen Probestück mit einer Dicke von 3 mm gemäß Standard ASTM D1003.

**3.** Polymerzusammensetzung nach Anspruch 1 oder 2, wobei die Polymerzusammensetzung bis zu 50,0 Gew.-% von mindestens einer weiteren Polymerkomponente D umfasst, basierend auf der gesamten Polymerzusammensetzung, die ausgewählt ist aus

Copolymeren D1, umfassend mindestens ein monovinylaromatisches Monomer und mindestens ein Carbonsäureanhydridmonomer; und
Copolymeren D2, umfassend mindestens ein monovinylaromatisches Monomer und mindestens ein Vinylcyanidmonomer.

**4.** Polymerzusammensetzung nach einem der Ansprüche 1 bis 3, wobei das Polymer A auf Acrylbasis 40,0 bis 100,0 Gew.-%, vorzugsweise 45,0 bis 100,0 Gew.-%, bevorzugter 55,0 bis 99,5 Gew.-% von mindestens einem Alkylmethacrylatmonomer mit 1 bis 20, vorzugsweise 1 bis 12, bevorzugter 1 bis 8, am meisten bevorzugt 1 bis 4 Kohlenstoffatomen in der Alkylgruppe umfasst, basierend auf dem Gesamtgewicht des Polymers A auf Acrylbasis.

**5.** Polymerzusammensetzung nach einem der Ansprüche 1 bis 4, wobei das Polymer A auf Acrylbasis ein thermoplastisches (Meth)acrylatpolymer ist, das umfasst:

50,0 bis 100,0 Gew.-%, vorzugsweise 65 bis 99 Gew.-% von mindestens einem Alkyl(meth)acrylat, vorzugsweise Methylmethacrylat;
0,0 bis 20,0 Gew.-%, vorzugsweise 0,1 bis 4 Gew.-% von mindestens einem Alkyl(meth)acrylat, das von Methylmethacrylat verschieden ist, vorzugsweise ausgewählt aus C1-C10-Alkylacrylaten;
0,0 bis 40 Gew.-%, vorzugsweise 5,0 Gew.-% bis 30,0 Gew.-% von mindestens einem vinylaromatischen Monomer, vorzugsweise Styrol; und
0,0 bis 20 Gew.-%, vorzugsweise 5,0 bis 20,0 Gew.-% von einem oder mehreren anderen copolymerisierbaren Monomeren, vorzugsweise ausgewählt aus ungesättigtem Carbonsäureanhydrid,
wobei alle Mengen basierend auf dem Gesamtgewicht des Polymers auf Acrylbasis A angegeben sind.

**6.** Polymerzusammensetzung nach einem der Ansprüche 1 bis 5, wobei das Polymer A auf Acrylbasis ein Copolymer aus Folgenden ist:

48,0 bis 90,0 Gew.-%, vorzugsweise 63,0 bis 81,0 Gew.-% von mindestens einem Alkyl(meth)acrylat, vorzugsweise Methylmethacrylat;
8,0 bis 35,0 Gew.-%, vorzugsweise 12,0 bis 22,0 Gew.-% von mindestens einem monovinylaromatischen Monomer; und 2,0 bis 17,0 Gew.-%, vorzugsweise 7,0 bis 15,0 Gew.-% von mindestens einem ungesättigten Carbonsäureanhydrid, vorzugsweise Maleinsäureanhydrid;
wobei alle Mengen auf dem Gesamtgewicht des Polymers auf Acrylbasis A basieren.

**7.** Polymerzusammensetzung nach einem der Ansprüche 1 bis 6, wobei das mindestens eine olefinische Copolymer B ein Polyolefin-Pfropfcopolymer ist, das mindestens ein Polyolefin-Basispolymer umfasst, das mit mindestens einem polaren Monomer ausgewählt aus ungesättigten Carbonsäuren, Estern von ungesättigten Carbonsäuren und Anhydriden von ungesättigten Carbonsäuren gepfropft ist.

**8.** Polymerzusammensetzung nach einem der Ansprüche 1 bis 7, wobei das mindestens eine olefinische Copolymer B ein Polyolefin-Pfropfcopolymer ist, das mindestens ein Polyolefin-Basispolymer umfasst, das mit 0,5 bis 3,0 Gew.-%, vorzugsweise 0,7 bis 2,5 Gew.-% von dem mindestens einen polaren Monomer ausgewählt aus Anhydriden von ungesättigten Carbonsäuren, vorzugsweise Maleinsäureanhydrid, gepfropft ist, basierend auf dem Gewicht des Pfropfcopolymers B.

**9.** Polymerzusammensetzung nach einem der Ansprüche 1 bis 8, wobei das partikelförmige mehrphasige Pfropfcopolymer C umfasst:

einen Kern auf Butadienbasis, umfassend mindestens 65,0 Gew.-%, vorzugsweise mindestens 75,0 Gew.-% Polybutadien, basierend auf dem Gewicht des Kerns auf Butadienbasis; und
einen Außenmantel, umfassend 60,0 Gew.-% bis 100,0 Gew.-%, vorzugsweise 65,0 Gew.-% bis 100,0 Gew.-% von mindestens einem Alkyl (meth)acrylat, basierend auf dem Gewicht des Außenmantels, und 0,0 Gew.-% bis 40,0 Gew.-%, vorzugsweise 0,0 Gew.-% bis 35,0 Gew.-% von mindestens einem aromatischen Vinylmonomer, basierend auf dem Gewicht des Außenmantels.

**10.** Polymerzusammensetzung nach einem der Ansprüche 1 bis 8, wobei das partikelförmige mehrphasige Pfropfcopolymer C ausgewählt ist aus Pfropfcopolymeren basierend auf einem elastomeren vernetzten Alkyl(meth)acrylatkern, und umfasst:

mindestens 40 Gew.-%, vorzugsweise 40 bis 70 Gew.-% von mindestens einem C1-C10-Alkylmethacrylat, vorzugsweise Methylmethacrylat;
5 bis 45 Gew.-%, vorzugsweise 20 bis 45 Gew.-%, vorzugsweise 25 bis 42 Gew.-% von mindestens einem C1-C10-Alkylacrylat;
0 bis 2 Gew.-%, vorzugsweise 0,1 bis 2 Gew.-%, bevorzugter 0,5 bis 1 Gew.-% von mindestens einem Vernetzungsmonomer; und
0 bis 15 Gew.-%, vorzugsweise 0 bis 10 Gew.-%, bevorzugter 0,5 bis 5 Gew.-% von gegebenenfalls weiteren

Monomeren.

**11.** Polymerzusammensetzung nach einem der Ansprüche 1 bis 10, wobei die Polymerzusammensetzung 5,0 bis 40,0 Gew.-%, vorzugsweise 10,0 bis 35,0 Gew.-% von mindestens einem weiteren Schlagzähmodifizierungsmittel F ausgewählt aus thermoplastischen Schlagzähmodifizierungsmitteln, wie aliphatischen thermoplastischen Polyurethanen, Methacrylat-Acrylat-Blockcopolymeren, Styrol-Butadien-Blockcopolymeren und Ethylen-Propylen-Dien-Kautschuken umfasst, basierend auf der gesamten Polymerzusammensetzung.

**12.** Verfahren zur Herstellung einer Polymerzusammensetzung nach einem der Ansprüche 1 bis 11, wobei das Verfahren Mischen der Komponente A, B, C und gegebenenfalls D, E und/oder F umfasst, vorzugsweise Schmelzmischen der Komponente A, B, C und gegebenenfalls D, E und/oder F.

**13.** Verfahren zur Herstellung eines Formartikels aus Polymerzusammensetzung nach einem der Ansprüche 1 bis 11, wobei das Verfahren einen Schritt des Spritzgießens der Zusammensetzung umfasst.

**14.** Formartikel, umfassend eine Polymerzusammensetzung nach einem der Ansprüche 1 bis 11.

**15.** Formartikel nach Anspruch 14, wobei der Formartikel eine medizinische Vorrichtung ist, vorzugsweise eine medizinische Einwegvorrichtung, zum Beispiel ausgewählt aus medizinischen Diagnosevorrichtungen, intravenösem und Katheterzubehör, Blutbehandlungsvorrichtungen, Thoraxdrainageeinheiten, respiratorischen Beatmungsvorrichtungen, medizinischen Filtergehäusen, Permanentvorrichtungsgehäusen, Rohren, Verbindern, Fittings und Küvetten; oder der Formkörper ausgewählt ist aus Teilen von Haushaltsgeräten; Teilen von Kommunikationsgeräten; Teilen von Elektronikkomponenten; Teilen von Ausrüstungen für Hobbys; Teilen von Sportausrüstungen; Teilen von Gartengeräten; Außen- und Innenteilen von Automobilen, Schiffen oder Luftfahrzeugen; Teilen von Karosseriebauteilen für den Bau von Automobilen, Schiffen oder Luftfahrzeugen; Teilen von Sanitär- und Badeausstattung.

**16.** Verwendung von Polymerzusammensetzung nach einem der Ansprüche 1 bis 11 in einer medizinischen Vorrichtung, vorzugsweise einer medizinischen Einwegvorrichtung, zum Beispiel ausgewählt aus medizinischen Diagnosevorrichtungen, intravenösem und Katheterzubehör, Blutbehandlungsvorrichtungen, Thoraxdrainageeinheiten, respiratorischen Beatmungsvorrichtungen, medizinischen Filtergehäusen, Permanentvorrichtungsgehäusen, Rohren, Verbindern, Fittings und Küvetten.

## Revendications

**1.** Composition de polymère comprenant, par rapport au poids de la composition de polymère, les composants A, B et C suivants :

A. 40,0 à 94,5 % en poids, de préférence 50,0 à 84,0 % en poids, d'au moins un polymère à base acrylique comprenant au moins un (méth)acrylate d'alkyle ;
B. 0,5 à 12,0 % en poids, de préférence 1,0 à 10,0 % en poids, d'au moins un copolymère oléfinique B, comprenant au moins un monomère oléfinique et au moins un monomère polaire choisi parmi les acides carboxyliques insaturés, les esters d'acides carboxyliques insaturés et les anhydrides d'acides carboxyliques insaturés ;
C. 5,0 à 40,0 % en poids, de préférence 10,0 à 36,0 % en poids, d'au moins un copolymère greffé multiphase particulaire, qui comprend un noyau et au moins une enveloppe, comprenant au moins un (méth)acrylate d'alkyle.

**2.** Composition de polymère selon la revendication 1, dans laquelle la composition de polymère a un trouble égal ou inférieur à 70 %, mesuré à 23 °C sur un échantillon moulé par injection ayant une épaisseur de 3 mm selon la norme ASTM D1003.

**3.** Composition de polymère selon la revendication 1 ou 2, dans laquelle la composition de polymère comprend jusqu'à 50,0 % en poids, par rapport à la composition de polymère totale, d'au moins un autre composant de polymère D choisi parmi

des copolymères D1 comprenant au moins un monomère aromatique monovinylique et au moins un monomère d'anhydride d'acide carboxylique ; et

des copolymères D2 comprenant au moins un monomère aromatique monovinylique et au moins un monomère de cyanure de vinyle.

4. Composition de polymère selon l'une quelconque des revendications 1 à 3, dans laquelle le polymère à base acrylique A comprend de 40,0 à 100,0 % en poids, de préférence de 45,0 à 100,0 % en poids, plus préférablement de 55,0 à 99,5 % en poids, par rapport au poids total du polymère à base acrylique A, d'au moins un monomère de méthacrylate d'alkyle ayant de 1 à 20, de préférence de 1 à 12, plus préférablement de 1 à 8, le plus préférablement de 1 à 4 atomes de carbone dans le groupe alkyle.

5. Composition de polymère selon l'une quelconque des revendications 1 à 4, dans laquelle le polymère à base acrylique A est un polymère thermoplastique de (méth)acrylate, qui comprend :

50,0 à 100,0 % en poids, de préférence 65 à 99 % en poids, d'au moins un (méth)acrylate d'alkyle, de préférence le méthacrylate de méthyle ;
0,0 à 20,0 % en poids, de préférence 0,1 à 4 % en poids, d'au moins un (méth)acrylate d'alkyle autre que le méthacrylate de méthyle, de préférence choisi parmi les acrylates d'alkyle en C1-C10 ;
0,0 à 40 % en poids, de préférence 5,0 % en poids à 30,0 % en poids, d'au moins un monomère aromatique vinylique, de préférence le styrène ; et
0,0 à 20 % en poids, de préférence 5,0 à 20,0 % en poids, d'un ou plusieurs autres monomères copolymérisables, de préférence choisis parmi un anhydride d'acide carboxylique insaturé
dans laquelle toutes les quantités sont données par rapport au poids total du polymère à base acrylique A.

6. Composition de polymère selon l'une quelconque des revendications 1 à 5, dans laquelle le polymère à base acrylique A est un copolymère de :

48,0 à 90,0 % en poids, de préférence 63,0 à 81,0 % en poids d'au moins un (méth)acrylate d'alkyle, de préférence le méthacrylate de méthyle ;
8,0 à 35,0 % en poids, de préférence 12,0 à 22,0 % en poids d'au moins un monomère aromatique monovinylique ; et
2,0 à 17,0 % en poids, de préférence 7,0 à 15,0 % en poids d'au moins un anhydride d'acide carboxylique insaturé, de préférence l'anhydride maléique ;
dans laquelle toutes les quantités sont basées sur le poids total du polymère à base acrylique A.

7. Composition de polymère selon l'une quelconque des revendications 1 à 6, dans laquelle l'au moins un copolymère oléfinique B est un copolymère greffé de polyoléfine, qui comprend au moins un polymère de base de polyoléfine greffé avec au moins un monomère polaire choisi parmi les acides carboxyliques insaturés, les esters d'acides carboxyliques insaturés et les anhydrides d'acides carboxyliques insaturés.

8. Composition de polymère selon l'une quelconque des revendications 1 à 7, dans laquelle l'au moins un copolymère oléfinique B est un copolymère greffé de polyoléfine, qui comprend au moins un polymère de base de polyoléfine greffé avec 0,5 à 3,0 % en poids, de préférence 0,7 à 2,5 % en poids, par rapport au poids du copolymère greffé B, de l'au moins un monomère polaire choisi parmi les anhydrides d'acides carboxyliques insaturés, de préférence l'anhydride maléique.

9. Composition de polymère selon l'une quelconque des revendications 1 à 8, dans laquelle le copolymère greffé multiphase particulaire C comprend :

un noyau à base de butadiène, comprenant au moins 65,0 % en poids, de préférence au moins 75,0 % en poids, par rapport au poids du noyau à base de butadiène, de polybutadiène ; et
une enveloppe extérieure, comprenant 60,0 % en poids à 100,0 % en poids, de préférence 65,0 % en poids à 100,0 % en poids, par rapport au poids de l'enveloppe extérieure, d'au moins un (méth)acrylate d'alkyle, et 0,0 % en poids à 40,0 % en poids, de préférence 0,0 % en poids à 35,0 % en poids, par rapport au poids de l'enveloppe extérieure, d'au moins un monomère vinylique aromatique.

10. Composition de polymère selon l'une quelconque des revendications 1 à 8, dans laquelle le copolymère greffé multiphase particulaire C est choisi parmi les copolymères greffés basés sur un noyau élastomérique de (méth) acrylate d'alkyle réticulé et comprend :

au moins 40 % en poids, de préférence 40 à 70 % en poids, d'au moins un méthacrylate d'alkyle en C1-C10, de préférence le méthacrylate de méthyle ;
5 à 45 % en poids, de préférence 20 à 45 % en poids, de préférence 25 à 42 % en poids, d'au moins un acrylate d'alkyle en C1-C10 ;
0 à 2 % en poids, de préférence 0,1 à 2 % en poids, plus préférablement 0,5 à 1 % en poids, d'au moins un monomère de réticulation ; et
0 à 15 % en poids, de préférence 0 à 10 % en poids, plus préférablement 0,5 à 5 % en poids, de monomères éventuellement supplémentaires.

**11.** Composition de polymère selon l'une quelconque des revendications 1 à 10, dans laquelle la composition de polymère comprend 5,0 à 40,0 % en poids, de préférence 10,0 à 35,0 % en poids, par rapport à la composition de polymère totale, d'au moins un autre modificateur de résistance aux chocs F, choisi parmi les modificateurs de résistance aux chocs thermoplastiques, tels que les polyuréthanes aliphatiques thermoplastiques, les copolymères séquencés méthacrylate-acrylate, les copolymères séquencés styrène-butadiène et les caoutchoucs éthylène-propylène-diène.

**12.** Procédé de fabrication d'une composition de polymère selon l'une quelconque des revendications 1 à 11, dans lequel le procédé comprend le mélange du composant A, B, C et éventuellement D, E et/ou F, de préférence le mélange à l'état fondu du composant A, B, C et éventuellement D, E et/ou F.

**13.** Procédé de fabrication d'un article moulé à partir d'une composition de polymère selon l'une quelconque des revendications 1 à 11, dans lequel le procédé comprend une étape de moulage par injection de ladite composition.

**14.** Article moulé comprenant une composition de polymère selon l'une quelconque des revendications 1 à 11.

**15.** Article moulé selon la revendication 14, dans lequel l'article moulé est un dispositif médical, de préférence un dispositif médical jetable, par exemple choisi parmi les dispositifs de diagnostic médical, les accessoires intraveineux et de cathéter, les dispositifs de manipulation du sang, les unités de drainage thoracique, les dispositifs de ventilation respiratoire, les boîtiers de filtres médicaux, les boîtiers de dispositifs permanents, les tubes, les connecteurs, les raccords et les cuvettes ; ou l'article moulé est choisi parmi les pièces d'appareils ménagers ; les pièces d'appareils de communication ; les pièces de composants électroniques ; les pièces d'équipement pour les loisirs ; les pièces d'équipement pour le sport ; les pièces d'équipement de jardinage ; les pièces extérieures et intérieures d'automobiles, de navires ou d'aéronefs ; les pièces de composants de carrosserie utilisées dans la construction d'automobiles, de navires ou d'aéronefs ; les pièces d'équipements sanitaires et de bain.

**16.** Utilisation d'une composition de polymère selon l'une quelconque des revendications 1 à 11 dans un dispositif médical, de préférence un dispositif médical jetable, par exemple choisi parmi les dispositifs de diagnostic médical, les accessoires intraveineux et de cathéter, les dispositifs de manipulation du sang, les unités de drainage thoracique, les dispositifs de ventilation respiratoire, les boîtiers de filtres médicaux, les boîtiers de dispositifs permanents, les tubes, les connecteurs, les raccords et les cuvettes.

Fig. 1

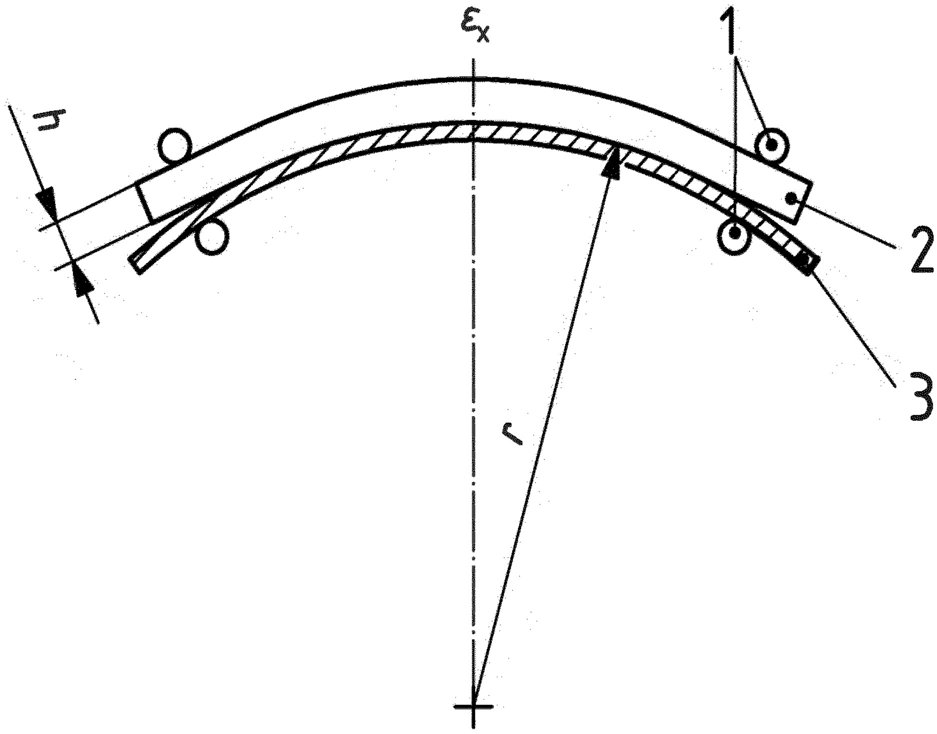


Fig. 2

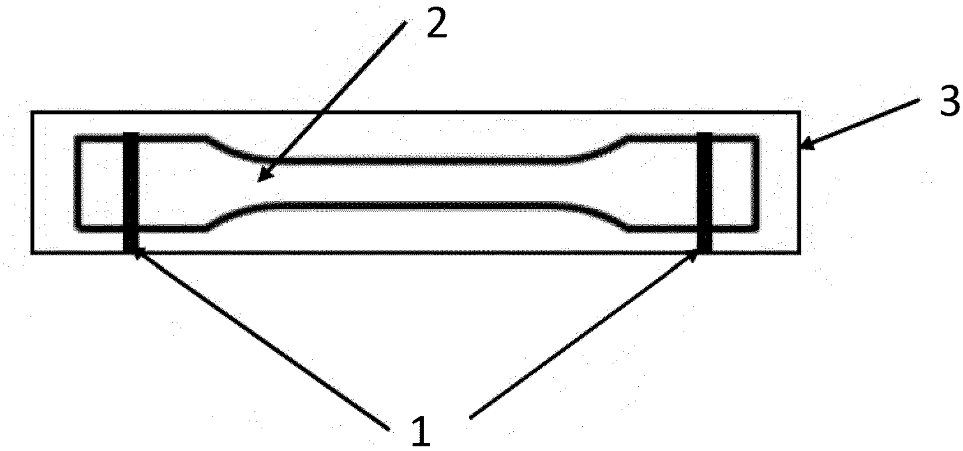

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020126722 A1
- WO 2008148595 A1
- US 6689827 B1
- WO 200146317 A1
- JP H02272050 A
- US 9834645 B2
- US 8524826 B2
- JP 2001279105 A
- JP 63268754 A
- WO 2016010893 A1
- WO 9516718 A
- WO 2002093157 A
- US 20110254204 A
- DE 1231013 B
- US 3336267 A
- EP 264590 A
- US 4085166 A
- EP 1332166 B1
- WO 0220634 A
- EP 0522351 A
- EP 0113924 A2
- EP 0522351 A1
- EP 0465049 A2
- EP 0683028 A1
- DE 4440219 A1


### Non-patent literature cited in the description


- **H. F. MARK et al.** Encyclopaedia of Polymer Science and Engineering. J. Wiley, 1989, vol. 10, 1
- *Kunststoffe [Plastics*, 1984, vol. 74 (10), 620-623
- *Farbe + Lack [Paints + Finishes*, September 1990, 689-693
- Plasticisers. **D. F. CADOGAN**. Ullmann's Encyclopaedia of Industrial Chemistry. 2012